# EUROPEAN PATENT APPLICATION

(11) **EP 4 568 407 A1**
(43) Date of publication of application: **11.06.2025**
(21) Application number: 23849899.2
(22) Date of filing: 20.07.2023
(51) Int. Cl.: H04W 76/10, H04W 56/00

(54) **INFORMATION PROCESSING DEVICE AND INFORMATION PROCESSING METHOD**

(30) Priority: 05.08.2022 JP 2022125449
(71) Applicant: Sony Group Corporation, Tokyo 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2023/026503
(87) International publication number: WO 2024/029344

(57) **Abstract**

An information processing device includes an acquisition unit that acquires capability information including information concerning a processing capability concerning TSN (Time-Sensitive Networking) traffics of a wireless network forming at least a part of a TSN network and a notification unit that notifies the capability information to a communication device that performs processing concerning the TSN traffics.

## Description

### Field

The present disclosure relates to an information processing device and an information processing method.

### Background

In recent years, a technology called TSN (Time-Sensitive Networking) has been attracting attention. The TSN is a technology concerning a network that places importance on a time from when a packet is transmitted until when the packet is received. In recent years, application of TSN to a 5G network has been studied.

### Citation List

### Patent Literature

Patent Literature 1: JP 2022-522630 W

### Summary

### Technical Problem

A cellular network such as a 5G network is a wireless network. The TSN is originally a technology for a wired network. Even if the TSN is simply applied to the wireless network, a TSN network (for example, a network having a low delay and a small delay fluctuation (jitter)) including a function aimed by the TSN cannot be achieved.

Therefore, the present disclosure proposes an information processing device and an information processing method that can implement a TSN network in which a wireless network is used.

Note that the problem or the object explained above is merely one of a plurality of problems or objects that can be solved or achieved by a plurality of embodiments disclosed in the present specification.

### Solution to Problem

In order to solve the above problem, an information processing device according to one embodiment of the present disclosure includes: an acquisition unit that acquires capability information including information concerning a processing capability concerning TSN (Time-Sensitive Networking) traffics of a wireless network forming at least a part of a TSN network; and a notification unit that notifies the capability information to a communication device that performs processing concerning the TSN traffics.

### Brief Description of Drawings

FIG. 1 is a diagram illustrating an overview of a TSN network.
FIG. 2 is a diagram illustrating an application example of TSN to a 5G network.
FIG. 3 is a diagram illustrating an application example of the TSN to the 5G network.
FIG. 4 is a diagram illustrating a configuration example of a communication system according to an embodiment of the present disclosure.
FIG. 5 is a diagram illustrating a configuration example of a management device according to the embodiment of the present disclosure.
FIG. 6 is a diagram illustrating a configuration example of a base station according to the embodiment of the present disclosure.
FIG. 7 is a diagram illustrating a configuration example of a terminal device according to the embodiment of the present disclosure.
FIG. 8 is a diagram illustrating a configuration example of a network management device according to the embodiment of the present disclosure.
FIG. 9 is a diagram illustrating a configuration example of a communication device according to the embodiment of the present disclosure.
FIG. 10 is a diagram illustrating a configuration example of the 5G network.
FIG. 11 is a diagram illustrating a configuration example of a 4G network.
FIG. 12 is a diagram illustrating a use example of private 5G/4G.
FIG. 13 is a diagram for explaining APIs of a 5G core network.
FIG. 14 is a diagram for describing APIs of the 5G core network.
FIG. 15 is a diagram illustrating a network architecture of the 5G network functioning as a TSN bridge.
FIG. 16 is a diagram illustrating a configuration example of a network slice.
FIG. 17 is a diagram illustrating states of areas and base stations.
FIG. 18 is a diagram illustrating a sequence example in the case in which information concerning a processing capability of the network slice is disclosed as capability information.
FIG. 19 is a diagram illustrating a sequence example in the case in which information concerning a processing capability of an area is disclosed as capability information.
FIG. 20 is a diagram illustrating an example of TSN traffic generation by a TSN system.
FIG. 21 is a diagram illustrating an example of TSN traffic generation by the TSN system.
FIG. 22 is a diagram illustrating an example of TSN traffic generation by the TSN system.
FIG. 23 is a diagram illustrating a configuration of an offset control function.

### Description of Embodiments

Embodiments of the present disclosure are explained in detail below with reference to the drawings. Note that, in the embodiments explained below, redundant explanation is omitted by denoting the same parts with the same reference numerals and signs.

In the present specification and the drawings, a plurality of components having substantially the same functional configuration are sometimes distinguished by adding different numbers after the same reference signs. For example, a plurality of components having substantially the same functional configuration are distinguished as management devices 10₁ and 10₂ according to necessity. However, when it is not particularly necessary to distinguish each of the plurality of components having substantially the same functional configuration, only the same reference sign is added. For example, when it is unnecessary to particularly distinguish the management devices 10₁ and 10₂, the management devices 10₁ and 10₂ are simply referred to as management device 10.

One or a plurality of embodiments (including examples and modifications) explained below can be respectively independently implemented. On the other hand, at least a part of the plurality of embodiments explained below may be implemented in combination with at least a part of other embodiments as appropriate. These plurality of embodiments can include new characteristics different from one another. Therefore, these plurality of embodiments can contribute to solving objects or problems different from one another and can achieve effects different from one another.

### <<1. Overview>>

In recent years, a technology called TSN (Time-Sensitive Networking) has been attracting attention. The TSN is a technology concerning a TSN network.

### <1-1. Overview of the TSN network>

The TSN network is a network that places importance on a time from when a packet is transmitted until when the packet is received. In order to be able to say that importance is placed on the time, it is important not only that the packet arrives fast but also that the packet arrives at an assumed time. That is, the TSN network can be defined as a network having a low delay and a small delay fluctuation (jitter). Note that the TSN network may be defined as a network aiming to implement functions described in (1) to (4) below. The TSN is standardized by IEEE802.1.
(1) Low latency (low delay)
(2) Deterministic (less jitter)
(3) Reliable (less failure)
(4) High-band width (large capacity)

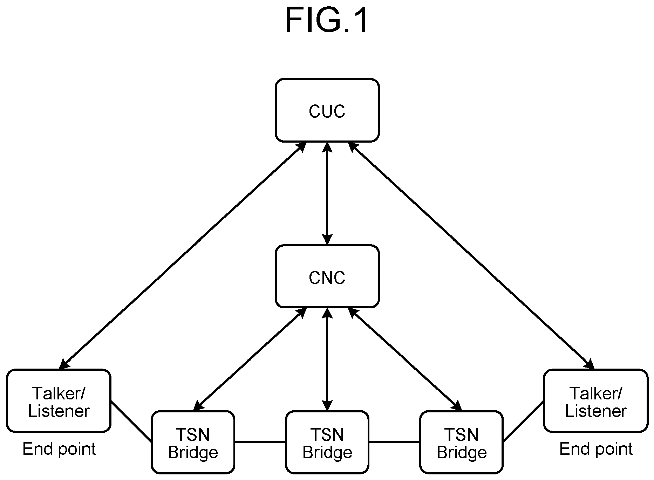

FIG. 1 is a diagram illustrating an overview of the TSN network. In the TSN network, a packet transmitted from a Talker is transmitted to a Listener via a plurality of bridges (hereinafter also referred to as TSN bridges). The Talker and the Listener are respectively devices or applications serving as endpoints of communication. For example, the Talker and the Listener may be servers or terminal devices or may be application functions included in these devices. The TSN bridges are networks disposed between the Talker and the Listener. In order to implement the functions of the TSN, a CUC (Centralized user configuration) and a CNC (Centralized network configuration) are disposed in the TSN network. The CUC is an entity that takes up requirements and settings from the endpoints and communicates the requirements and the settings to the CNC. The CNC is an entity that gives, to the TSN bridges, various instructions for implementing the functions of the TSN.

### <1-2. Application of the TSN to the 5G network>

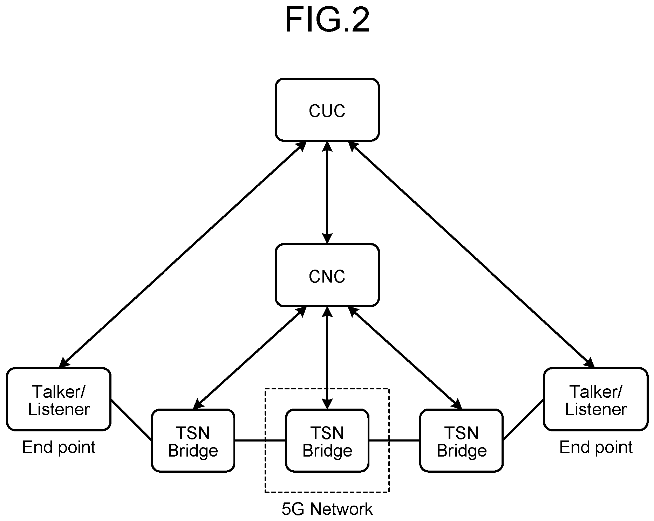

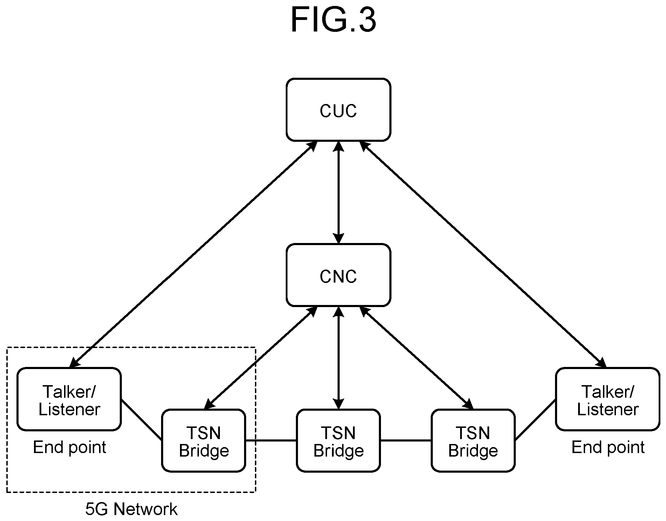

In recent years, application of the TSN to the 5G network has been studied. For example, in Release 17 of 3GPP (registered trademark), it is studied how to apply the TSN to the 5G network (3GPP TS23.501). FIG. 2 and FIG. 3 are diagrams illustrating application examples of the TSN to the 5G network. In the example illustrated in FIG. 2, one of a plurality of TSN bridges is the 5G network. In the example illustrated in FIG. 3, the TSN bridge and one of endpoints are the 5G network. Note that the application example of the TSN to the 5G network is not limited to the examples illustrated in FIG. 2 and FIG. 3. For example, the plurality of TSN bridges may be the 5G network or both of the endpoints may be the 5G network.

### <1-3. Overview of problems and solutions of the present embodiment>

A cellular network such as a 5G network is a wireless network. The TSN is originally a technology for a wired network. Even if the TSN is simply applied to the wireless network, a TSN network sufficiently including functions aimed by transmitted TSN cannot be achieved. For example, it is assumed that a lot of traffics of the TSN (hereinafter referred to as TSN traffics) arrive at the 5G network at one time. At this time, if the computational power of the 5G network or the capacity of frequency resources is exceeded, it is likely that the TSN network cannot deliver the TSN traffics (packets) to a Listener within a determined delay range.

Therefore, the information processing device in the present embodiment acquires capability information including information concerning a processing capability of the TSN traffics of a wireless network (for example, a 5G network) that forms at least a part of the TSN network. Here, the information processing device may be, for example, a server configuring a core network of the 5G network. The information processing device notifies the capability information to a communication device (for example, a CUC, a CNC, or a Talker) that performs processing concerning the TSN traffics. The communication device performs control concerning the TSN traffics based on the capability information. For example, the communication device groups the TSN traffics or controls transmission timing of the TSN traffics based on the capability information.

Accordingly, since the TSN traffics are controlled considering a processing capability of the wireless network, even if the wireless network is included in the TSN network, it is possible to implement the TSN network sufficiently including the functions aimed by the TSN.

### <<2. Configuration of a communication system>>

The overview of the present embodiment is explained above. Before the present embodiment is explained in detail, a configuration of a communication system 1 including the information processing device in the present embodiment is explained. Note that the communication system can be replaced as information processing system.

### <2-1. Overall configuration of the communication system>

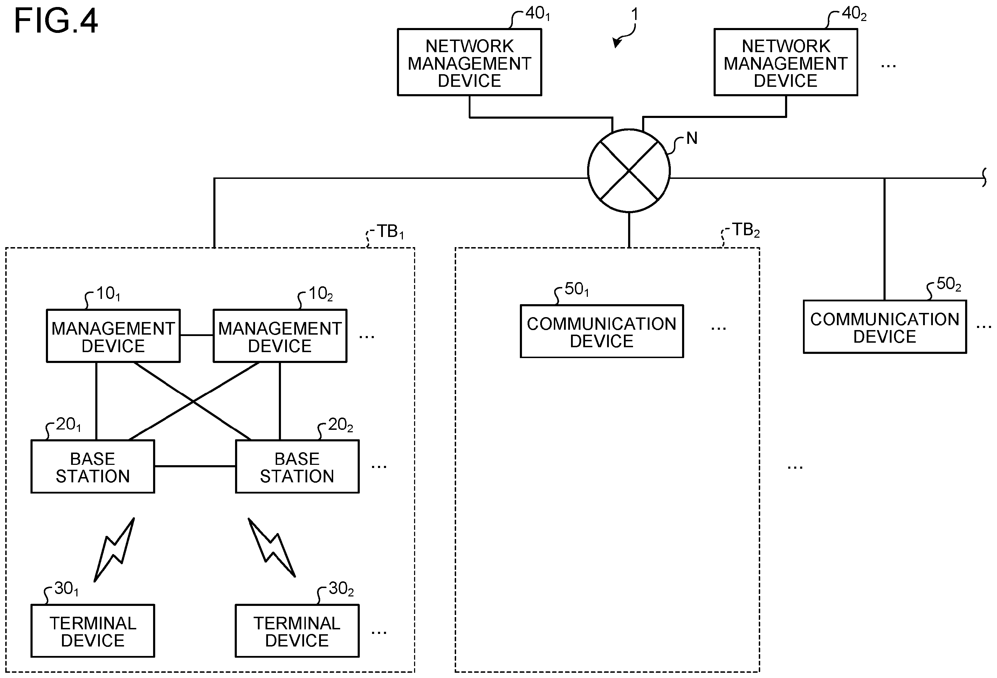

FIG. 4 is a diagram illustrating a configuration example of the communication system 1 according to the embodiment of the present disclosure. The communication system 1 is a TSN system functioning as a TSN network. The communication system 1 includes bridges TB, communication devices 50, and network management devices 40.

The devices configuring the communication system 1 are connected via a network N. Although only one network N is illustrated in the example illustrated in FIG. 4, a plurality of networks N may be present. Here, the network N is a public network such as the Internet. Note that the network N is not limited to the Internet and may be, for example, a LAN (Local Area Network), a WAN (Wide Area Network), a cellular network, a fixed telephone network, or a regional IP (Internet protocol) network. The network N may include a wired network or may include a wireless network.

The bridges TB are TSN bridges, and at least one of the bridges TB is a wireless network of a cellular scheme such as 4G or 5G (hereinafter also referred to as cellular network). In the example illustrated in FIG. 4, at least a bridge TB₁ is the cellular network. In the bridge TB₁, a management device 10, a base station 20, and a terminal device 30 are disposed. The plurality of bridges TB are connected to the network management devices 40 via the network N. The wireless network in the present embodiment is configured by, for example, a radio access network and a core network. Note that, in the present embodiment, a wireless communication device refers to a device having a function of wireless communication. In the example illustrated in FIG. 4, the base station 20 and the terminal device 30 correspond to the wireless communication device.

The communication system 1 may include a plurality of management devices 10, a plurality of base stations 20, a plurality of terminal devices 30, a plurality of network management devices 40, and a plurality of communication devices 50. In the example illustrated in FIG. 4, the communication system 1 includes management devices 10₁ and 10₂ as the management device 10 and includes base stations 20₁ and 20₂ as the base station 20. The communication system 1 includes terminal devices 30₁ and 30₂ as the terminal device 30 and includes network management devices 40₁ and 40₂ as the network management device 40. The communication system 1 includes communication devices 50₁ and 50₂ as the communication device 50.

Note that the devices in the figure may be considered devices in a logical sense. That is, a part of the devices in the figure may be implemented by a virtual machine (VM), a container, a docker, and the like and may be implemented on physically the same hardware.

Note that the wireless network functioning as the bridge TB may support a wireless access technology (RAT) such as LTE (Long Term Evolution) or NR (New Radio). The LTE and the NR are types of a cellular communication technology and enable mobile communication of terminal devices by disposing a plurality of areas covered by a base station in a cell shape. Note that a wireless access scheme used by the communication system 1 is not limited to the LTE and the NR and may be another wireless access scheme such as W-CDMA (Wideband Code Division Multiple Access) or cdma2000 (Code Division Multiple Access 2000).

A base station or a relay station configuring the wireless network may be a ground station or may be a non-ground station. The non-ground station may be a satellite station or may be an aircraft station. If the non-ground station is a satellite station, the wireless network functioning as the bridge TB may be a Bent-pipe (Transparent) type mobile satellite communication system.

Note that, in the present embodiment, the ground station (also referred to as ground base station) refers to a base station (including a relay station) installed on the ground. Here, the "ground" is a ground in a broad sense including not only the land but also underground, on water, and underwater. Note that, in the following explanation, the description of "ground station" may be replaced with "gateway".

Note that an LTE base station is sometimes referred to as eNodeB (Evolved Node B) or eNB. An NR base station is sometimes referred to as gNodeB or gNB. In the LTE and the NR, the terminal device (also referred to as mobile station or terminal) is sometimes referred to as UE (User Equipment). Note that the terminal device is a type of a communication device and is also referred to as mobile station or terminal.

In the present embodiment, the concept of the communication device includes not only a portable mobile device (terminal device) such as a portable terminal but also a device installed in a structure or a mobile body. The structure or the mobile body itself may be regarded as the communication device. The concept of the communication device includes not only the terminal device but also the base station and the relay station. The communication device is a type of a processing device and an information processing device. The communication device can also be referred to as transmission device or reception device.

In the following explanation, configurations of the devices configuring the communication system 1 are specifically explained. Note that the configurations of the devices explained below are merely an example. The configurations of the devices may be different from the configurations explained below.

### <2-2. Configuration of the management device>

Subsequently, a configuration of the management device 10 is explained.

The management device 10 is an information processing device (a computer) that manages a wireless network. For example, the management device 10 is an information processing device that manages communication of the base station 20. The management device 10 may be, for example, a device having a function as an MME (Mobility Management Entity). The management device 10 may be a device having a function of an AMF (Access and Mobility Management Function) and/or an SMF (Session Management Function). Naturally, the functions of the management device 10 are not limited to the MME, the AMF, and the SMF. The management device 10 may be a device having a function of an NSSF (Network Slice Selection Function), an AUSF (Authentication Server Function), a PCF (Policy Control Function), and a UDM (Unified Data Management). The management device 10 may be a device having a function of an HSS (Home Subscriber Server). The management device 10 may include a function (a CUC or a CNC) included in the network management device 40 and may function as the network management device 40.

Note that the management device 10 may have a function of a gateway. For example, the management device 10 may have a function of an S-GW (Serving Gateway) or a P-GW (Packet Data Network Gateway). The management device 10 may have a function of a UPF (User Plane Function). At this time, the management device 10 may have a plurality of UPFs.

The core network may be configured from a plurality of network functions. The network functions may be aggregated into one physical device or may be distributed to a plurality of physical devices. That is, the management device 10 can be distributed and disposed in a plurality of devices. Further, this distributed disposition may be controlled to be dynamically executed. The base station 20 and the management device 10 configure one network and provide a wireless communication service to the terminal device 30. The management device 10 is connected to the Internet. The terminal device 30 can use, via the base station 20, various services provided via the Internet.

Note that the management device 10 may not always be a device configuring the core network. For example, it is assumed that the core network is a core network of W-CDMA (Wideband Code Division Multiple Access) or cdma2000 (Code Division Multiple Access 2000). At this time, the management device 10 may be a device functioning as an RNC (Radio Network Controller).

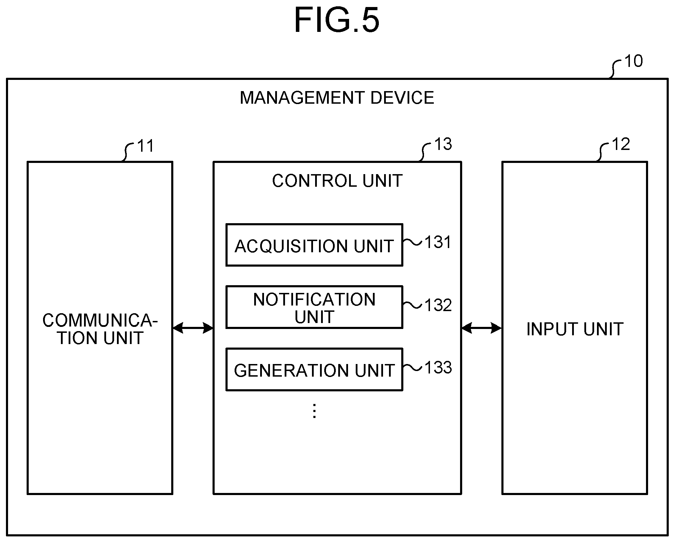

FIG. 5 is a diagram illustrating a configuration example of the management device 10 according to the embodiment of the present disclosure. The management device 10 includes a communication unit 11, a storage unit 12, and a control unit 13. Note that the configuration illustrated in FIG. 5 is a functional configuration. A hardware configuration may be different from this configuration. The functions of the management device 10 may be statically or dynamically distributed and implemented in a plurality of physically separated components. For example, the management device 10 may configured by a plurality of server devices.

The communication unit 11 is a communication interface for communicating with other devices. The communication unit 11 may be a network interface or may be an equipment connection interface. For example, the communication unit 11 may be a LAN (Local Area Network) interface such as an NIC (Network Interface Card) or may be a USB interface configured by a USB (Universal Serial Bus) host controller, a USB port, and the like. The communication unit 11 may be a wired interface or a wireless interface. The communication unit 11 functions as communication means of the management device 10. The communication unit 11 communicates with the base station 20 and the like according to control of the control unit 13.

The storage unit 12 is a data readable/writable storage device such as a DRAM (Dynamic Random Access Memory), an SRAM (Static Random Access Memory), a flash memory, or a hard disk. The storage unit 12 functions as storage means of the management device 10. The storage unit 12 stores, for example, a connection state of the terminal device 30. For example, the storage unit 12 stores a state of RRC (Radio Resource Control) or a state of ECM (EPS Connection Management) or 5G System CM (Connection Management) of the terminal device 30. The storage unit 12 may function as a home memory that stores position information of the terminal device 30.

The control unit 13 is a controller that controls the units of the management device 10. The control unit 13 is implemented by a processor such as a CPU (Central Processing Unit), an MPU (Micro Processing Unit), or a GPU (Graphics Processing Unit). For example, the control unit 13 is implemented by the processor executing various programs stored in a storage device inside the management device 10 using a RAM (Random Access Memory) or the like as a work area. Note that the control unit 13 may be implemented by an integrated circuit such as an ASIC (Application Specific Integrated Circuit) or an FPGA (Field Programmable Gate Array). All of the CPU, the MPU, the GPU, the ASIC, and the FPGA can be regarded as the controller.

As illustrated in FIG. 5, the control unit 13 includes an acquisition unit 131, a notification unit 132, and a generation unit 133. The blocks (the acquisition unit 131 to the generation unit 133) configuring the control unit 13 are functional blocks indicating functions of the control unit 13. These functional blocks may be software blocks or may be hardware blocks. For example, each of the functional blocks explained above may be one software module implemented by software (including a microprogram) or may be one circuit block on a semiconductor chip (a die). Naturally, each of the functional blocks may be one processor or one integrated circuit. A configuration method for the functional blocks is optional. Note that the control unit 13 may be configured by functional units different from the functional blocks explained above.

### <2-3. Configuration of the base station>

Subsequently, a configuration of the base station 20 is explained. The base station 20 can be replaced as BS (Base Station).

The base station 20 is a wireless communication device that wirelessly communicates with the terminal device 30. The base station 20 may be configured to wirelessly communicate with the terminal device 30 via a relay station or may be configured to directly wirelessly communicate with the terminal device 30.

The base station 20 is a type of a communication device. More specifically, the base station 20 is a device equivalent to a wireless base station (Base Station, Node B, eNB, gNB, or the like) or a wireless access point. The base station 20 may be a wireless relay station. The base station 20 may be an optical extension device called RRH (Remote Radio Head) or RU (Radio Unit). The base station 20 may be a receiving station such as an FPU (Field Pickup Unit). The base station 20 may be an IAB (Integrated Access and Backhaul) donor node or an IAB relay node that provides a wireless access line and a wireless backhaul line with time division multiplexing, frequency division multiplexing, or space division multiplexing.

Note that a wireless access technology used by the base station 20 may be a cellular communication technology or a wireless LAN technology. Naturally, the wireless access technology used by the base station 20 is not limited the above and may be another wireless access technology. For example, the wireless access technology used by the base station 20 may be a LPWA (Low Power Wide Area) communication technology. Naturally, wireless communication used by the base station 20 may be wireless communication in which millimeter waves are used. The wireless communication used by the base station 20 may be wireless communication in which radio waves are used or wireless communication (optical wireless) in infrared rays or visible light is used. The base station 20 may be capable of performing NOMA (Non-Orthogonal Multiple Access) communication with the terminal device 30. Here, the NOMA communication is communication (transmission, reception, or both of transmission and reception) in which non-orthogonal resources are used. Note that the base station 20 may be capable of performing the NOMA communication with the other base stations 20.

Note that the base stations 20 may be capable of communicating with one another via a base station-core network interface (for example, an NG Interface or an S1 Interface). This interface may be either wired or wireless. The base stations may be capable of communicating with one another via an inter-base station interface (for example, an Xn Interface, an X2 Interface, an S1 Interface, or an F1 Interface). This interface may be either wired or wireless.

Note that the concept of the base station includes not only a donor base station but also a relay base station (also referred to as relay station). For example, the relay base station may be any one of RF Repeater, Smart Repeater, and Intelligent Surface. The concept of the base station includes not only a structure having a function of the base station but also a device installed in the structure.

The structure is a building such as a high-rise building, a house, a steel tower, a station facility, an airport facility, a harbor facility, an office building, a school building, a hospital, a factory, a commercial facility, or a stadium. Note that the concept of the structure includes not only a building but also a structure (Non-building structure) such as a tunnel, a bridge, a dam, a wall, or an iron pillar and equipment such as a crane, a gate, or a windmill. The concept of the structure includes not only a structure on the land (the ground in a narrow sense) or in the ground but also a structure on water such as a pier or a mega-float and a structure under water such as marine observation equipment. The base station can be replaced as information processing device.

The base station 20 may be a donor station or a relay station (a relay station). The base station 20 may be a fixed station or a mobile station. The mobile station is a wireless communication device configured to be movable. At this time, the base station 20 may be a device installed in a mobile body or may be the mobile body itself. For example, a relay station having mobility can be regarded as the base station 20 functioning as a mobile station. A device originally having a mobility and implemented with a function of a base station (at least a part of the function of the base station) such as a vehicle, a UAV (Unmanned Aerial Vehicle) represented by a drone, or a smartphone also corresponds to the base station 20 functioning as a mobile station.

Here, the mobile body may be a mobile terminal such as a smartphone or a mobile phone. The mobile body may be a mobile body (for example, a vehicle such as an automobile, a bicycle, a bus, a truck, a motorcycle, a train, or a linear motor car) that moves on the land (the ground in a narrow sense) or a mobile body (for example, a subway) that moves in the ground (for example, in a tunnel). The mobile body may be a mobile body (for example, a ship such as a passenger ship, a cargo ship, or a hovercraft) that moves on water or a mobile body (for example, a submersible such as a submersible ship, a submarine, or an unmanned submersible) that moves under water. Note that the mobile body may be a mobile body (for example, an aircraft such as an airplane, an airship, or a drone) that moves in the atmosphere.

The base station 20 may be a ground base station (a ground station) installed on the ground. For example, the base station 20 may be a base station disposed in a structure on the ground or may be a base station installed in a mobile body moving on the ground. More specifically, the base station 20 may be an antenna installed in a structure such as a building and a signal processing device connected to the antenna. Naturally, the base station 20 may be the structure or the mobile body itself. The "ground" is a ground in a broad sense including not only on the land (on the ground in a narrow sense) but also underground, on water, and underwater. Note that the base station 20 is not limited to the ground base station. For example, when the communication system 1 is a satellite communication system, the base station 20 may be an aircraft station. From the perspective of a satellite station, an aircraft station located on the earth is a ground station.

Note that the base station 20 is not limited to a ground station. The base station 20 may be a non-ground base station (non-ground station) capable of floating in the air or space. For example, the base station 20 may be an aircraft station or a satellite station.

The satellite station is a satellite station capable of floating outside the atmosphere. The satellite station may be a device loaded on a space mobile body such as an artificial satellite or may be the space mobile body itself. The space mobile body is a mobile body that moves outside the atmosphere. Examples of the space mobile body include artificial celestial bodies such as an artificial satellite, a spacecraft, a space station, and a probe. Note that a satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. Naturally, the satellite station may be a device loaded on the low earth orbiting satellite, the middle earth orbiting satellite, the geostationary earth orbiting satellite, or the high elliptical orbiting satellite.

The aircraft station is a wireless communication device capable of floating in the atmosphere such as an aircraft. The aircraft station may be a device loaded on an aircraft or the like or may be the aircraft itself. Note that the concept of the aircraft includes not only a heavy aircraft such as an airplane and a glider but also a light aircraft such as a balloon and an airship. The concept of the aircraft includes not only the heavy aircraft and the light aircraft but also a rotorcraft such as a helicopter and an auto-gyroscope. Note that the aircraft station (or an aircraft on which the aircraft station is loaded) may be an unmanned aircraft such as a drone.

Note that the concept of the unmanned aircraft also includes an unmanned aircraft system (UAS) and a tethered UAS. The concept of the unmanned aircraft includes a Lighter than Air UAS (LTA) and a Heavier than Air UAS (HTA). Besides, the concept of the unmanned aircraft also includes High Altitude UAS Platforms (HAPs).

The size of the coverage of the base station 20 may be a large size such the size of as a macro cell or the size of a small cell such as the size of a picocell. Naturally, the size of the coverage of the base station 20 may be an extremely small size such as the size of a femtocell. The base station 20 may have a beamforming capability. In this case, a cell or a service area may be formed in the base station 20 for each beam.

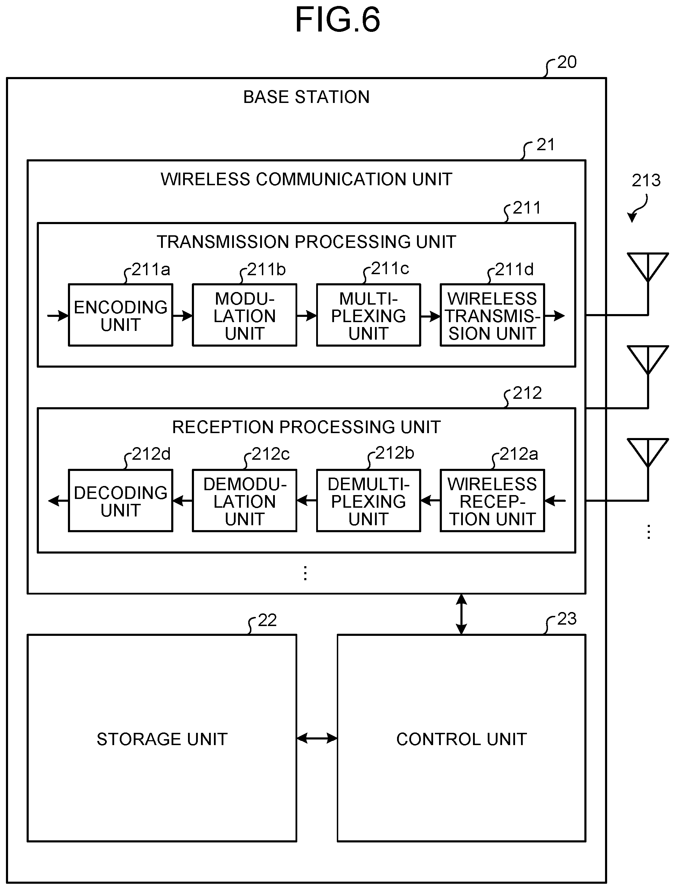

FIG. 6 is a diagram illustrating a configuration example of the base station 20 according to the embodiment of the present disclosure. The base station 20 includes a wireless communication unit 21, a storage unit 22, and a control unit 23. Note that the configuration illustrated in FIG. 6 is a functional configuration. A hardware configuration may be different from this configuration. The functions of the base station 20 may be distributed and implemented in a plurality of physically separated components.

The wireless communication unit 21 is a signal processing unit for wirelessly communicating with other wireless communication devices (for example, the terminal device 30). The wireless communication unit 21 operates according to the control of the control unit 23. The wireless communication unit 21 is adapted to one or a plurality of wireless access schemes. For example, the wireless communication unit 21 is adapted to both of the NR and the LTE. The wireless communication unit 21 may be adapted to W-CDMA or cdma2000 in addition to the NR or the LTE. The wireless communication unit 21 may be adapted to an automatic retransmission technology such as HARQ (Hybrid Automatic Repeat reQuest).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. Note that, when the wireless communication unit 21 is adapted to a plurality of wireless access schemes, the units of the wireless communication unit 21 can be configured individually for each of the wireless access schemes. For example, the transmission processing unit 211 and the reception processing unit 212 may be individually configured by the LTE and the NR. The antenna 213 may be configured by a plurality of antenna elements (for example, a plurality of patch antennas). In this case, the wireless communication unit 21 may be configured to be capable of performing beamforming. The wireless communication unit 21 may be configured to be capable of performing polarization beamforming using vertically polarized waves (V-polarized waves) and horizontally polarized waves (H-polarized waves).

The transmission processing unit 211 performs transmission processing for downlink control information and downlink data. For example, the transmission processing unit 211 encodes the downlink control information and the downlink data input from the control unit 23 using an encoding scheme such as block encoding, convolutional encoding, turbo encoding, or the like. Here, as the encoding, encoding by a polar code or encoding by an LDPC code (Low Density Parity Check Code) may be performed. Then, the transmission processing unit 211 modulates encoded bits with a predetermined modulation scheme such as BPSK, QPSK, 16QAM, 64QAM, or 256QAM. In this case, signal points on a constellation do not always need to be equidistant. The constellation may be a non uniform constellation (NUC). Then, the transmission processing unit 211 multiplexes modulation symbols of channels and a downlink reference signal and disposes the multiplexed symbols and the multiplexed downlink reference signal in a predetermined resource element. Then, the transmission processing unit 211 performs various kinds of signal processing on the multiplexed signal. For example, the transmission processing unit 211 performs processing such as conversion into a frequency domain by fast Fourier transform, addition of a guard interval (cyclic prefix), generation of a baseband digital signal, conversion into an analog signal, quadrature modulation, up-conversion, removal of an extra frequency component, and amplification of power. The signal generated by the transmission processing unit 211 is transmitted from the antenna 213.

The reception processing unit 212 processes an uplink signal received via the antenna 213. For example, the reception processing unit 212 performs, on the uplink signal, down-conversion, removal of an unnecessary frequency component, control of an amplification level, quadrature demodulation, conversion into a digital signal, removal of a guard interval (cyclic prefix), extraction of a frequency domain signal by fast Fourier transform, and the like. Then, the reception processing unit 212 separates uplink channels such as a PUSCH (Physical Uplink Shared Channel) and a PUCCH (Physical Uplink Control Channel) and an uplink reference signal from the signals subjected to these kinds of processing. Further, the reception processing unit 212 demodulates the received signal using a modulation scheme such as BPSK (Binary Phase Shift Keying) or QPSK (Quadrature Phase Shift Keying) with respect to the modulation symbol of the uplink channel. The modulation scheme used for the demodulation may be 16QAM (Quadrature Amplitude Modulation), 64QAM, or 256QAM. In this case, signal points on a constellation do not always need to be equidistant. The constellation may be a non-uniform constellation (NUC). The reception processing unit 212 performs decoding processing on encoded bits of the demodulated uplink channels. Decoded uplink data and uplink control information are output to the control unit 23.

The antenna 213 is an antenna device (an antenna unit) that mutually converts a current and a radio wave. The antenna 213 may be configured by one antenna element (for example, one patch antenna) or may be configured by a plurality of antenna elements (for example, a plurality of patch antennas). When the antenna 213 is configured by a plurality of antenna elements, the wireless communication unit 21 may be configured to be capable of performing beamforming. For example, the wireless communication unit 21 may be configured to generate a directional beam by controlling the directivity of a radio signal using the plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) in transmitting radio signals. Then, the wireless communication unit 21 may control the directivity of the radio signal transmitted using the vertically polarized wave and the horizontally polarized wave. Furthermore, the wireless communication unit 21 may transmit and receive spatially multiplexed signals via a plurality of layers including a plurality of antenna elements.

The storage unit 22 is a data readable/writable storage device such as a DRAM, an SRAM, a flash memory, or a hard disk. The storage unit 22 functions as storage means of the base station 20.

The control unit 23 is a controller that controls the units of the base station 20. The control unit 23 is implemented by, for example, a processor such as a CPU or an MPU. For example, the control unit 23 is implemented by the processor executing various programs stored in a storage device inside the base station 20 using a RAM or the like as a work area. Note that the control unit 23 may be implemented by an integrated circuit such as an ASIC or an FPGA. All of the CPU, the MPU, the ASIC, and the FPGA can be regarded as the controller. The control unit 23 may be implemented by a GPU in addition to or instead of the CPU. Note that the operation of the control unit 23 may be the same as the operation of the blocks of the control unit 13 of the management device 10.

In the present embodiment, the concept of the base station may be configured by a set of a plurality of physical or logical devices. For example, in the present embodiment, the base station may be distinguished into a plurality of devices such as a BBU (Baseband Unit) and an RU(Radio Unit). Then, the base station may be interpreted as an aggregate of the plurality of devices. The base station may be one of the BBU and the RU or may be both of the BBU and the RU. The BBU and the RU may be connected by a predetermined interface (for example, eCPRI (enhanced Common Public Radio Interface)). Note that the RU may also be replaced as RRU (Remote Radio Unit) or RD(Radio DoT). The RU may correspond to a gNB-DU (gNB Distributed Unit) explained below. Further, the BBU may correspond to a gNB-CU (gNB Central Unit) explained below. The RU may be a wireless device connected to a gNB-DU explained below. The gNB-CU, the gNB-DU, and the RU connected to the gNB-DU may be configured to conform to an O-RAN (Open radio access Network). Further, the RU may be a device formed integrally with an antenna. An antenna (for example, an antenna formed integrally with the RU) included in the base station may adopt an Advanced Antenna System and support MIMO (for example, FD-MIMO) or beamforming. The antenna included in the base station may include, for example, sixty-four transmission antenna ports and sixty-four reception antenna ports.

The antenna loaded in the RU may be an antenna panel configured from one or more antenna elements. The RU may be loaded with one or more antenna panels. For example, the RU may be loaded with two types of antenna panels including a horizontally polarized antenna panel and a vertically polarized antenna panel or two antenna panels including a clockwise circularly polarized antenna panel and a counterclockwise circularly polarized antenna panel. The RU may form and control an independent beam for each of the antenna panels.

Note that a plurality of base stations may be connected to one another. One or a plurality of base stations may be included in a radio access network (RAN). In this case, the base station is sometimes simply referred to as RAN, RAN node, AN (Access Network), or AN node. Note that a RAN in LTE is sometimes called EUTRAN (Enhanced Universal Terrestrial RAN). A RAN in NR is sometimes called NGRAN. A RAN in W-CDMA (UMTS) is sometimes called UTRAN.

Note that an LTE base station is sometimes referred to as eNodeB (Evolved Node B) or eNB. At this time, the EUTRAN includes one or a plurality of eNodeBs (eNBs). An NR base station is sometimes referred to as gNodeB or gNB. At this time, the NGRAN includes one or a plurality of gNBs. The EUTRAN may include a gNB (en-gNB) connected to a core network (EPC) in an LTE communication system (EPS). Similarly, the NGRAN may include an ng-eNB connected to a core network 5GC in a 5G communication system (5GS).

Note that, when the base station is the eNB, the gNB, or the like, the base station is sometimes referred to as 3GPP access. When the base station is a wireless access point, the base station is sometimes referred to as non-3GPP access. Further, the base station may be an optical extension device called RRH (Remote Radio Head) or RU (Radio Unit). When the base station is the gNB, the base station may be a combination of the gNB-CU and the gNB-DU explained above or may be one of the gNB-CU and the gNB-DU.

Here, the gNB-CU hosts, for communication with the UE, a plurality of upper layers (for example, RRC (Radio Resource Control), SDAP (Service Data Adaptation Protocol), and PDCP (Packet Data Convergence Protocol)) in an access stratum. On the other hand, the gNB-DU hosts a plurality of lower layers (for example, RLC (Radio Link Control), MAC (Medium Access Control), and PHY (Physical layer)) in the access stratum. That is, among messages/information explained below, RRC signaling (a semi-static notification) may be generated by the gNB-CU and, on the other hand, MAC CE and DCI (a dynamic notification) may be generated by the gNB-DU. Alternatively, among RRC configurations (semi-static notifications), for example, a part of the configurations such as IE: cellGroupConfig may be generated by the gNB-DU and the remaining configurations may be generated by the gNB-CU. These configurations may be transmitted and received by an F1 interface explained below.

Note that the base station may be configured to be capable of communicating with other base stations. For example, when a plurality of base stations are a combination of eNBs or eNBs and en-gNBs, the base stations may be connected by an X2 interface. When the plurality of base stations are the combination of the gNBs or the gn-eNBs and the gNBs, the devices may be connected by an Xn interface. When the plurality of base stations are a combination of gNB-CUs and gNB-DUs, the devices may be connected by the F1 interface explained above. A message/information (for example, RRC signaling, a MAC CE (MAC Control Element), or a DCI) explained below may be transmitted among a plurality of base stations, for example, via the X2 interface, the Xn interface, or the F1 interface.

Cells provided by the base station are sometimes called serving cells. The concept of the serving cells includes a PCell (Primary Cell) and an SCell (Secondary Cell). When dual connectivity is set for a UE (for example, the terminal device 30), a PCell and zero or one or more SCells provided by an MN (Master Node) are sometimes called Master Cell Group. Examples of the dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity.

Note that the serving cells may include a PSCell (Primary Secondary Cell or Primary SCG Cell). When the dual connectivity is set for the UE, a PSCell and zero or one or more SCells provided by an SN (Secondary Node) are sometimes called SCG (Secondary Cell Group). Unless specially set (for example, PUCCH on SCell), a physical uplink control channel (PUCCH) is transmitted by the PCell and the PSCell but is not transmitted by the SCell. A radio link failure is also detected by the PCell and the PSCell but is not detected (may not be detected) by the SCell. As explained above, since the PCell and the PSCell have a special role among the serving cells, the PCell and the PSCell are called SpCell (Special Cell) as well.

One downlink component carrier and one uplink component carrier may be associated with one cell. In addition, a system bandwidth corresponding to one cell may be divided into a plurality of BWPs (Bandwidth Parts). In this case, one or a plurality of BWPs may be set for the UE and one BWP may be used for the UE as an active BWP. Wireless resources (for example, a frequency band, numerology (subcarrier spacing), and a slot configuration) that can be used by the terminal device 30 may be different for each cell, each component carrier, or each BWP.

### <2-4. Configuration of the terminal device>

Subsequently, a configuration of the terminal device 30 is explained. The terminal device 30 can be replaced as UE (User Equipment).

The terminal device 30 is a wireless communication device that wirelessly communicates with other communication devices such as the base station 20. The terminal device 30 is, for example, a mobile phone, a smart device (a smartphone or a tablet terminal), a PDA (Personal Digital Assistant), or a personal computer. The terminal device 30 may be equipment such as a business camera including a communication function or may be a motorcycle, a moving relay vehicle, or the like on which communication equipment such as an FPU (Field Pickup Unit) is mounted. The terminal device 30 may be an industrial robot including a communication function. The terminal device 30 may be an M2M (Machine to Machine) device or an IoT (Internet of Things) device.

Note that the terminal device 30 may be capable of performing NOMA communication with the base station 20. The terminal device 30 may be capable of using an automatic retransmission technology such as HARQ when communicating with the base station 20. The terminal device 30 may be capable of performing sidelink communication with the other terminal devices 30. The terminal device 30 may also be capable of using an automatic retransmission technology such as HARQ when performing sidelink communication. Note that the terminal device 30 may also be capable of performing NOMA communication in communication (sidelink) with the other terminal devices 30. The terminal device 30 may be capable of performing LPWA communication with the other communication devices (for example, the base station 20 and the other terminal devices 30). The wireless communication used by the terminal device 30 may be wireless communication in which millimeter waves are used. Note that the wireless communication (including the sidelink communication) used by the terminal device 30 may be wireless communication in which radio waves are used or wireless communication (optical wireless) in which infrared rays or visible light is used.

The terminal device 30 may be a mobile device. The mobile device is a movable wireless communication device. At this time, the terminal device 30 may be a wireless communication device installed in a mobile body or may be the mobile body itself. For example, the terminal device 30 may be a vehicle that moves on a road such as an automobile, a bus, a truck, or a motorcycle, a vehicle that moves on a rail installed on a track such as a train, or a wireless communication device mounted on the vehicle. Note that the mobile body may be a mobile terminal or may be a mobile body that moves on the land (on the ground in a narrow sense), underground, on water, or underwater. The mobile body may be a mobile body that moves inside the atmosphere such as a drone or a helicopter or may be a mobile body that moves outside the atmosphere such as an artificial satellite.

The terminal device 30 may be simultaneously connected to a plurality of base stations or a plurality of cells to carry out communication. For example, when one base station supports a communication area via a plurality of cells (for example, pCells and sCells), the plurality of cells can be bundled to enable the base station 20 and the terminal device 30 to communicate by a carrier aggregation (CA) technology, a dual connectivity (DC) technology, or a multi-connectivity (MC) technology. Alternatively, the terminal device 30 and the plurality of base stations 20 are also capable of communicating by a coordinated transmission and reception (CoMP: Coordinated Multi-Point Transmission and Reception) technology via cells of different base stations 20.

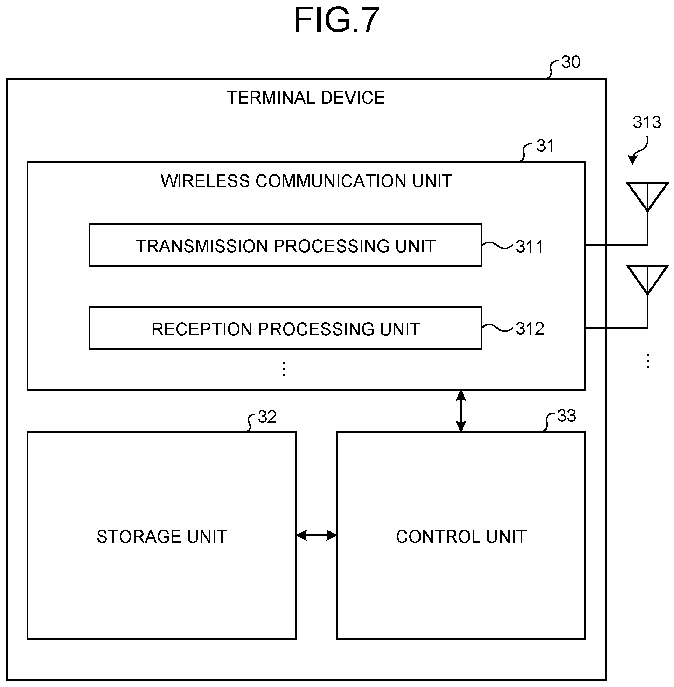

FIG. 7 is a diagram illustrating a configuration example of the terminal device 30 according to the embodiment of the present disclosure. The terminal device 30 includes a wireless communication unit 31, a storage unit 32, and a control unit 33. Note that the configuration illustrated in FIG. 7 is a functional configuration. A hardware configuration may be different from this configuration. The functions of the terminal device 30 may be distributed and implemented in a plurality of physically separated components.

The wireless communication unit 31 is a signal processing unit for wirelessly communicating with the other wireless communication devices (for example, the base station 20 and the other terminal devices 30). The wireless communication unit 31 operates according to the control of the control unit 33. The wireless communication unit 31 includes a transmission processing unit 311, a reception processing unit 312, and an antenna 313. Configurations of the wireless communication unit 31, the transmission processing unit 311, the reception processing unit 312, and the antenna 313 may be the same as the configurations of the wireless communication unit 21, the transmission processing unit 211, the reception processing unit 212, and the antenna 213 of the base station 20. The wireless communication unit 31 may be configured to be capable of performing beamforming like the wireless communication unit 21. Further, like the wireless communication unit 21, the wireless communication unit 31 may be configured to be capable of transmitting and receiving spatially multiplexed signals.

The storage unit 32 is a data readable/writable storage device such as a DRAM, an SRAM, a flash memory, or a hard disk. The storage unit 32 functions as storage means of the terminal device 30.

The control unit 33 is a controller that controls the units of the terminal device 30. The control unit 33 is implemented by a processor such as a CPU or an MPU. For example, the control unit 33 is implemented by the processor executing various programs stored in a storage device inside the terminal device 30 using a RAM or the like as a work area. Note that the control unit 33 may be implemented by an integrated circuit such as an ASIC or an FPGA. All of the CPU, the MPU, the ASIC, and the FPGA can be regarded as the controller. The control unit 33 may be implemented by a GPU in addition to or instead of the CPU. Note that the operation of the control unit 33 may be the same as the operation of the blocks of the control unit 13 of the management device 10.

### <2-5. Configuration of the network management device>

Subsequently, a configuration of the network management device 40 is explained.

The network management device 40 is an information processing device (a computer) including a function of managing a TSN network. For example, the network management device 40 is an information processing device (a computer) functioning as a CUC (Centralized user configuration) or a CNC (Centralized network configuration).

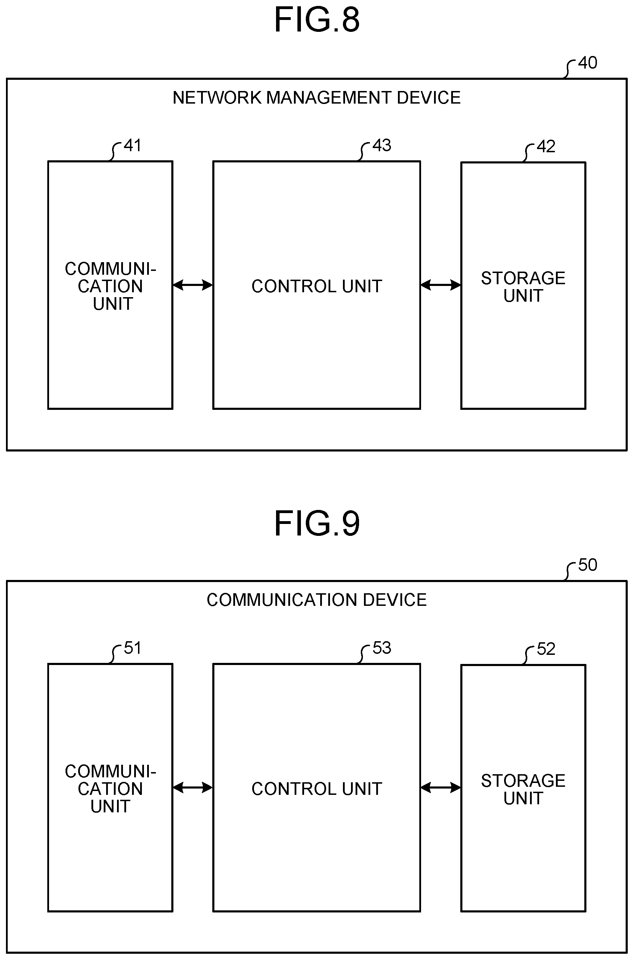

FIG. 8 is a diagram illustrating a configuration example of the network management device 40 according to the embodiment of the present disclosure. The network management device 40 includes a communication unit 41, a storage unit 42, and a control unit 43. Note that the configuration illustrated in FIG. 8 is a functional configuration. A hardware configuration may be different from this configuration. The functions of the network management device 40 may be statically or dynamically distributed and implemented in a plurality of physically separated components. For example, the network management device 40 may be configured by a plurality of server devices.

The communication unit 41 is a communication interface for communicating with the other devices. The communication unit 41 may be a network interface or an equipment connection interface. For example, the communication unit 41 may be a LAN interface such as an NIC or may be a USB interface configured by a USB host controller, a USB port, and the like. The communication unit 41 may be a wired interface or may be a wireless interface. The communication unit 41 functions as communication means of the network management device 40. The communication unit 41 communicates with the management device 10 and the like according to the control of the control unit 43.

The storage unit 42 is a data readable/writable storage device such as a DRAM, an SRAM, a flash memory, or a hard disk. The storage unit 42 functions as storage means of the network management device 40.

The control unit 43 is a controller that controls the units of the network management device 40. The control unit 43 is implemented by a processor such as a CPU, an MPU, or a GPU. For example, the control unit 43 is implemented by the processor executing various programs stored in a storage device inside the network management device 40 using a RAM or the like as a work area. Note that the control unit 43 may be implemented by an integrated circuit such as an ASIC or an FPGA. All of the CPU, the MPU, the GPU, the ASIC, and the FPGA can be regarded as the controller.

### <2-6. Configuration of the communication device>

Subsequently, a configuration of the communication device 50 is explained.

The communication device 50 is a communication device configuring a TSN bridge TB. For example, the communication device 50 may be a server configuring the TSN bridge TB or may be a communication device (for example, the management device 10, the base station 20, or the terminal device 30) configuring a wireless network. The communication device 50 may be a communication device serving as an endpoint (a Talker or a Listener) of a TSN network. For example, the communication device 50 may be the terminal device 30 or may be a server that transmits data to a communication device serving as an endpoint. The communication device 50 may be a device (for example, a CUC or a CNC) configuring a TSN system.

Note that, when the communication device 50 is a server, the communication device 50 may be an application server or a web server. The communication device 50 may be a PC server, may be a midrange server, or may be a mainframe server. The communication device 50 may be an information processing device that performs data processing (edge processing) near a user or a terminal. For example, the communication device 50 may be an information processing device (a computer) provided side by side with or built in a base station. Naturally, the communication device 50 may be an information processing device that performs cloud computing.

FIG. 9 is a diagram illustrating a configuration example of the communication device 50 according to the embodiment of the present disclosure. The communication device 50 includes a communication unit 11, a storage unit 12, and a control unit 13. Note that the configuration illustrated in FIG. 9 is a functional configuration. A hardware configuration may be different from this configuration. The functions of the communication device 50 may be distributed and implemented in a plurality of physically separated components. For example, the communication device 50 may be configured by a plurality of information processing devices.

The communication unit 51 is a communication interface for communicating with the other devices. For example, the communication unit 51 is a network interface. For example, the communication unit 51 is a LAN interface such as an NIC. Note that the communication unit 51 may be a wired interface or may be a wireless interface. The communication unit 51 functions as communication means of the communication device 50. The communication unit 51 communicates with the other communication devices according to the control of the control unit 53.

The storage unit 52 is a data readable/writable storage device such as a DRAM, an SRAM, a flash memory, or a hard disk. The storage unit 52 functions as storage means of the communication device 50.

The control unit 53 is a controller that controls the units of the communication device 50. The control unit 53 is implemented by, for example, a processor such as a CPU or an MPU. For example, the control unit 53 is implemented by the processor executing various programs stored in a storage device inside the communication device 50 using a RAM or the like as a work area. Note that the control unit 53 may be implemented by an integrated circuit such as an ASIC or an FPGA. All of the CPU, the MPU, the ASIC, and the FPGA can be regarded as the controller.

### <<3. Wireless network and TSN network>>

The configuration of the communication system 1 is explained above. Before the operation of the communication system 1 is explained in detail, a wireless network and a TSN network are explained.

### <3-1. Wireless network>

First, a wireless network is explained. Here, 4G/5G networks are explained as examples of the wireless network.

### <3-1-1. Roles of a cellular network and a core network>

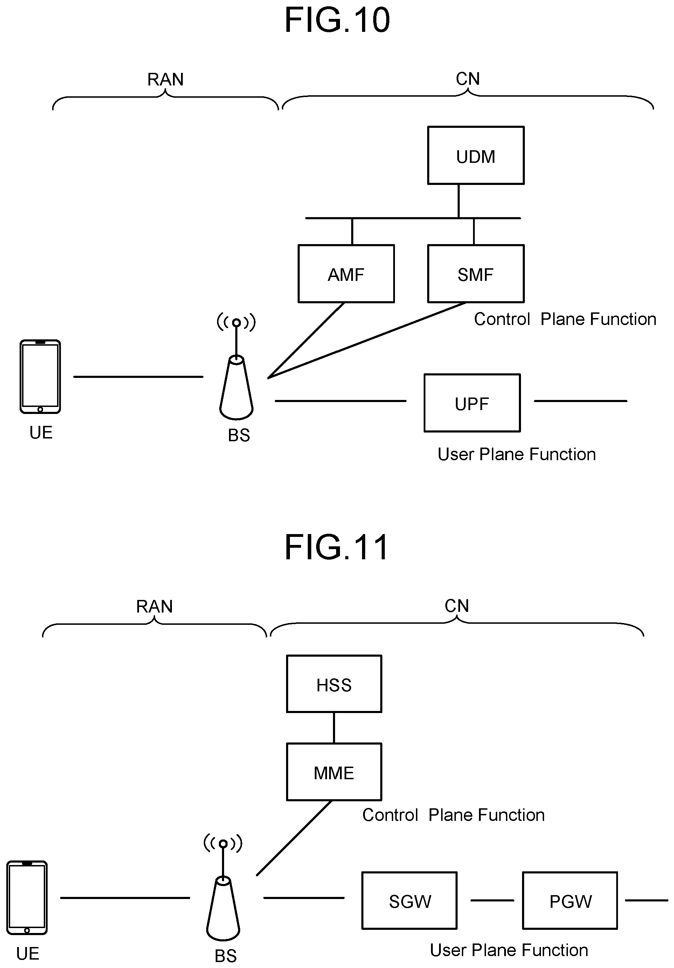

FIG. 10 and FIG. 11 are diagrams illustrating a configuration example of a cellular network. Specifically, FIG. 10 is a diagram illustrating a configuration example of the 5G network. FIG. 11 is a diagram illustrating a configuration example of the 4G network.

The cellular network is configured by an RAN (Radio Access Network) and a CN (Core Network). The RAN is a wireless system between a base station and a terminal. The CN mainly performs permission and session management when the terminal is connected to the network. In both 4G and 5G, the CN is configured by a control plane function and a user plane function.

The control plane function receives information from a data server called an HSS (Home Subscriber System), in which subscriber information of a UE is stored, to thereby, using agreement information of the UE and a key for encryption, determine whether the UE may be connected to a network and, for example, generate a key for encryption. That is, in order for the UE to be connected to the cellular network, information concerning the UE linked with a subscriber number called IMSI (International Mobile Subscriber Identity) present in a SIM (Subscriber Identity Module) card present in the UE needs to be stored in an HSS (a UDM). The HSS is sometimes called UDM (Unified Data Management) as well.

For the UE to attach the cellular system, in the case of 4G, an MME (Mobility Management Function) plays this role. In the case of 5G, an AMF or an SMF plays the role. When the UE is connected to a network and transmits and receives data, a function of a user plane (User-Plane) of the CN is necessary. In the case of 4G, an S-GW or a P-GW plays this role. In the case of 5G, a UPF (User Plane Function) plays this role. The P-GW of 4G and the UPF of 5G play a role of a gateway serving as a boundary between the CN and an external communication network (for example, the Internet). The CN may be disposed in the general Internet. For that reason, a CN-U (User Plane) equivalent to the P-GW or the UPF may be grasped as a gateway disposed at a boundary between the CN and a general application.

### <3-1-2. Private 5G/4G>

Currently, a LAN (Local Area Network) is disposed in many offices and homes. The LAN is configured by a LAN cable, a router, and the like. A communication device is connected to an ISP (Internet Service Provider) via the LAN. Private 5G or private 4G operates by placing a cellular base station in the LAN. In 3GPP, the private 5G/4G is called Non Public Network.

In the private 5G/4G, the base station and a terminal device are disposed, for example, in an office, a factory, a private home, or the like where the LAN is disposed. On the other hand, a CN (Core Network) that controls the base station may be disposed in the LAN or may be disposed in a cloud data center in the Internet. Private IP addresses are assigned to the base station and the CN. The base station and the CN can communicate with each other. For example, by using a technology such as a virtual private network, the base station and the CN can communicate with each other using the private IP addresses.

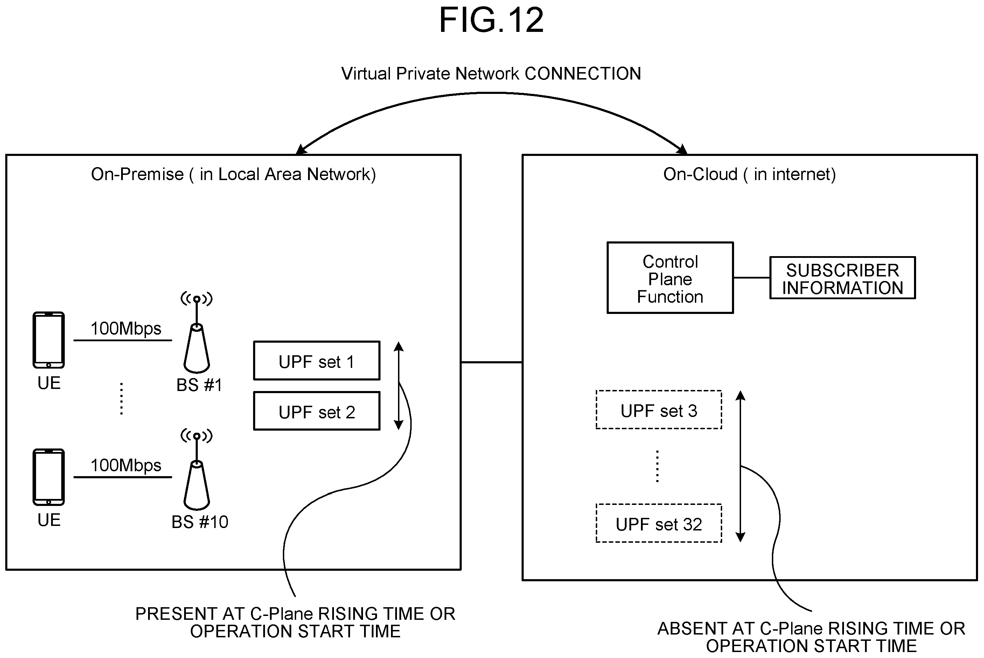

FIG. 12 is a diagram illustrating a use example of the private 5G/4G. In the example illustrated in FIG. 12, a plurality of user plane functions of the CN are disposed in the LAN and the cloud. A control plane function of the CN is disposed in the cloud. In the example illustrated in FIG. 12, the base station and the UE are disposed in a LAN area. Note that, in the private 5G/4G, in many cases, it is assumed that the UE, the base station, the CN, and an application are disposed on the inner side of the virtual private network.

### <3-1-3. API Of a 5G core network>

In a 5G core network, an API (Application Programming Interface) called SBI (Service Based Interface) is prepared. A communication device transmits information and controls functions via the API.

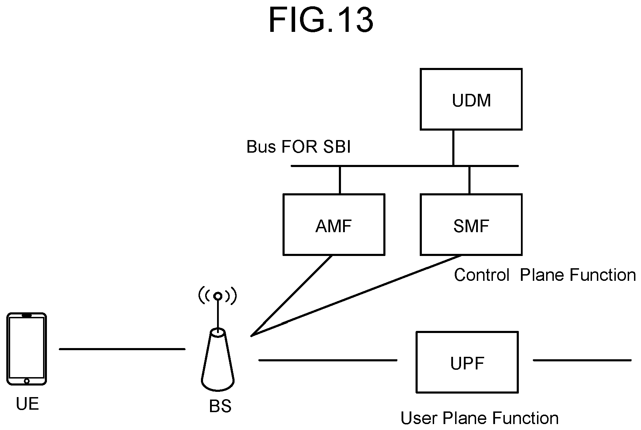

FIG. 13 is a diagram for explaining the API of the 5G core network. The API enables designation of a resource, GET (acquisition of the resource), POST (creation of the resource and addition of data), PUT (creation of the resource and update of the resource), DELETE (deletion of the resource), and the like for the resource. Such a function is a technique generally used in the world of Web. AMF, SMF, and UDM illustrated in the figure need to exchange information with one another, for example, when establishing a communication session. The AMF, the SMF, and the UDM exchange the information via APIs.

Most of these APIs are not for use by an application. However, it is considered that, by using these APIs, the application can perform more advanced information processing using information concerning a cellular network. In a Public Network, the application is not allowed to use the APIs without permission. However, in the private 5G, which is a Non Public network, use of the APIs including remodeling of the APIs of the core network is possible.

### <3-1-4. Example of the APIs of the 5G core network>

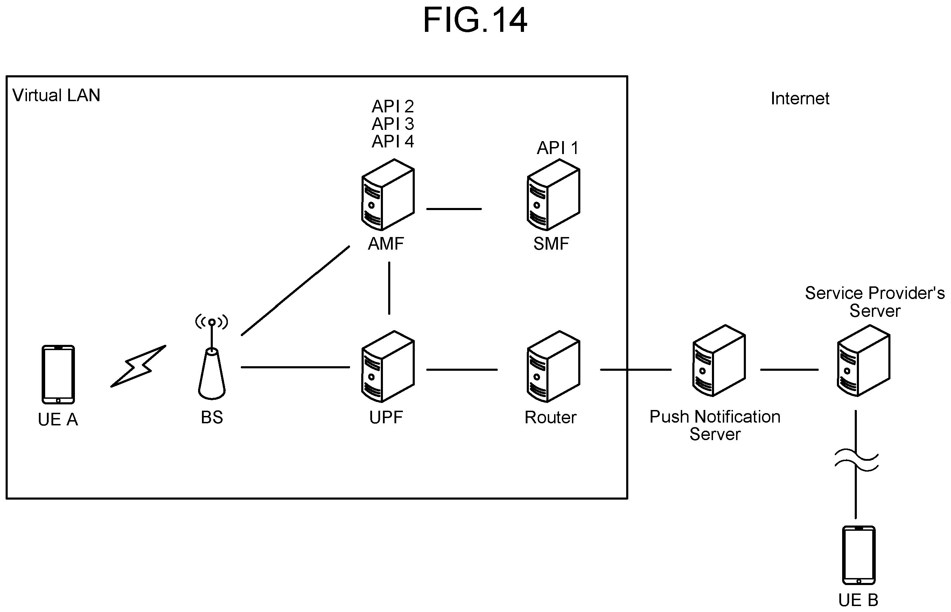

FIG. 14 is a diagram for explaining the APIs of the 5G core network. In an example illustrated in FIG. 14, the base station and the core network are disposed in a virtual LAN. The base station and the core network communicate with the Internet outside the virtual LAN via a router. Note that an API (1) to an API (4) explained here are described in 3GPP TS23.502.

### API(1):

The API (1) is an API in which an SMF notifies that a UE registered in advance transitions from a power-off state to a power-on state and attaches to a network and notifies an IP address acquired at that time.

### API(2):

The UE transitions to an Idle mode when not communicating and transitions to a Connected mode when communicating. The API (2) is an API in which an AMF notifies whether the UE is in the Idle mode or the Connected mode.

### API (3) :

The API (3) is an API for broadcasting, from the base station, a message (a Paging message) for instructing the UE to transition from the Idle mode to the Connected mode.

### API(4):

The API (4) is an API in which the AMF provides location information of the UE. The AMF uses the API (4) to inform in which Tracking Area the UE is, to which Cell the UE belongs, and the like.

### <3-2. TSN network>

The wireless network is explained above. Subsequently, the TSN network is explained.

### <3-2-1. Relation between an Industry 4.0 and a TSN>

An Industry 4.0 is a term meaning the fourth industrial revolution and is a technology for implementing small-volume production in great varieties in addition to conventional mass production. A smart factory is one of use cases of the industry 4.0. The smart factory enables all systems in a factory to communicate and can achieve the efficiency of the factory.

Digital twin is ranked as a core technology of the industry 4.0. With the digital twin, situations of the systems in the factory can be grasped on a network side and the grasped situations can be reflected again on control of actual equipment on the factory side. In recent years, the digital twin is also used in a use case for controlling an entire city. The digital twin can be defined as a subset of the industry 4.0.

As a core technology for implementing the industry 4.0, there is a technology called TSN (Time Sensitive Networking). The TSN is also used for the smart factory of the industry 4.0. The TSN is also used for the digital twin derived from the industry 4.0.

### <3-2-2. Overview of the TSN network>

The TSN network is a network that places importance on a time from when a packet is transmitted until when the packet is received. In order to be able to say that importance is placed on the time, it is important not only that the packet arrives fast but also that the packet arrives at an assumed time. That is, the TSN network can be defined as a network having a low delay and a small delay fluctuation (jitter). TSN has been standardized by IEEE802.1. That is, the TSN was originally a technology for a wired network.

Note that the TSN network may be defined as a network aiming to implement functions described in (1) to (4) below.
(1) Low latency (low delay)
(2) Deterministic (less jitter)
(3) Reliable (less failure)
(4) High-band width (large capacity)

In order to implement the above functions, the following means is prepared in the TSN.

### · Time synchronization

Time synchronization means that applications are synchronized in a time period. This means that time of an application on a reception side that expects to receive the packet at this time period is the same as time of an application on a transmission side that expects to deliver the packet at that time period. In the TSN, a gPTP (generalized Precision Time Protocol) is used to adjust a clock.

### · Scheduled traffic

In the TSN, a place (a time slot) where a packet can be transmitted is periodically prepared. The communication device preferentially transmits the packet to other packets in the time slot. In the TSN, a plurality of queues are prepared. When a packet to be transmitted in the time slot has arrived at the queue, the packet to be prioritized is transmitted first. The other packets are transmitted only when there is no packet to be preferentially transmitted in the time slot. Whether to be transmitted in the periodic time slot is determined by an identifier (for example, a Priority Code Point of a VLAN tag present in an Ethernet header) of a type of traffic given to a packet. This identifier can be changed for each application. The queues of priority control are prepared for each network called bridge. Therefore, when the packet passes through a plurality of bridges, the packet is delayed at a granularity of the time slot.

### · Frame Preemption

Frame Preemption means interrupt priority control and refers to a mechanism in which a priority packet makes a non-priority packet wait. That is, the Frame Preemption is a control rule used in the plurality of queues.

### · Per-stream filtering and policing

Per-stream filtering and policing is a method of filtering (also referred to as shaping) each traffic (stream) not to exceed a permitted band. For example, when traffic allowed to be transmitted at 10 Mbps is transmitted at 20 Mbps, the communication device stores the traffic once in a buffer and then transmits the traffic at intervals for transmitting the traffic at 10 Mbps. Accordingly, even if the traffic is transmitted at 20 Mbps in a burst manner, the transmission speed is averaged to 10 Mbps.

### · Frame replication and elimination for reliability

Frame replication and elimination for reliability is a technology in which, after one packet is copied into a plurality of packets, the plurality of packets are transmitted through a plurality of paths and, when the plurality of packets are received, the plurality of packets are restored into one packet. Accordingly, reliability is improved by redundancy in a section where the plurality of paths are used.

The above are the five main means for implementing the TSN. In order to implement these means, a CUC (Centralized user configuration) and a CNC (Centralized network configuration) are prepared in the TSN.

The CUC is an entity that takes up requirements and settings of devices or applications serving as endpoints of the TSN network and communicates the requirements and the settings to the CNC. The CNC is an entity that instructs bridges among the endpoints to implement the five means.

### <3-2-3. Typical use case of the TSN network>

As a typical use case of the TSN, a case of controlling industrial equipment in a factory is assumed. In this case, communication between a controller and a controller (C to C) and communication between an end device such as an actuator and a controller (C to D) are required.

As traffic required for C to C and C to D in the factory, some traffic is periodic and other traffic is aperiodic (sporadic). A period also varies depending on traffic. Some traffic has a period of 1 ms or less and other traffic has a period of 10 ms to 50 ms. As long traffic, for example, there is traffic used for network control and having a period of 50 ms to 1 s.

### <3-2-4. Function of the current 5G network with respect to the TSN network>

In the Release 17 of the 3GPP, it has been studied how to apply the TSN to the 5G network (3GPP TS23.501). Here, the 5G network is defined as one of bridges (hereinafter also referred to as TSN bridges) defined in the TSN.

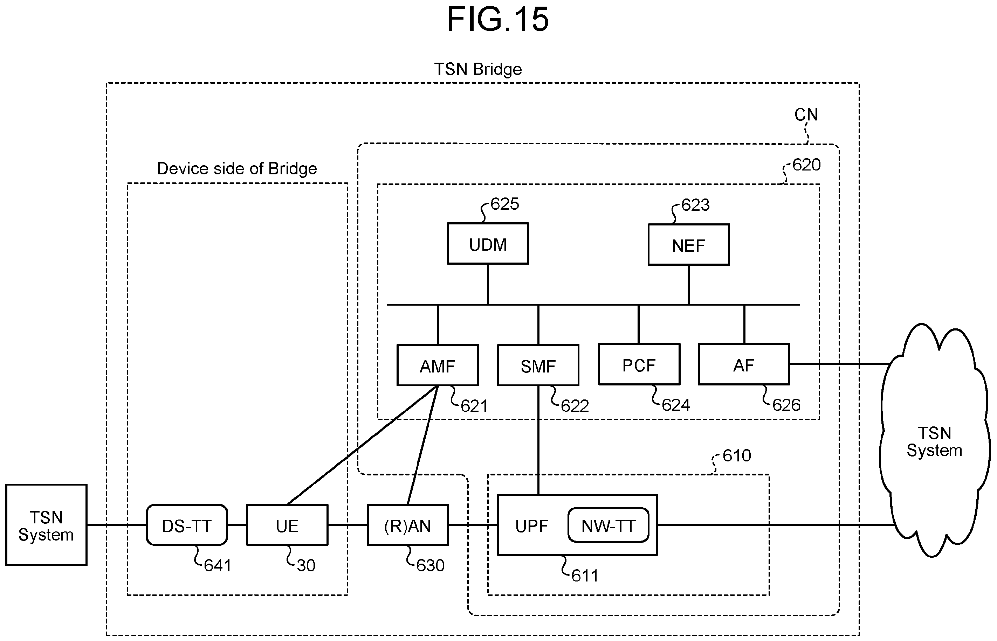

An architecture of a fifth generation mobile communication system (5G) is explained below as an example of the core network CN of the communication system 1. FIG. 15 is a diagram illustrating a network architecture of a 5G network that serves as a TSN bridge. The core network CN of 5G is also called 5GC (5G Core)/NGC (Next Generation Core). In the following explanation, the core network CN of 5G is also referred to as 5GC/NGC. The core network CN is connected to user equipment (UE) 30 via a (R)AN 630. Here, the core network CN is, for example, the management device 10. The UE 30 is, for example, the terminal device 30.

Note that, in the following explanation, a system configuring networks other than a cellular network (for example, a 5G network) functioning as a TSN bridge among TSN networks is sometimes referred to as TSN system.

The (R)AN 630 has a function of enabling connection to a RAN (Radio Access Network) and connection to an AN (Access Network) other than the RAN. The (R)AN 630 includes a base station called gNB or ng-eNB.

The core network CN mainly performs connection permission and session management when the UE 30 is connected to a network. The core network CN can include a user plane function group 610 and a control plane function group 620.

The user plane function group 610 includes a UPF (User Plane Function) 611. The UPF 421 has a function of user plane processing. The UPF 611 includes a routing/transfer function for data to be treated in a user plane. The user plane function group 420 plays a role of a Gateway serving as a boundary between the core network CN and the Internet.

The control plane function group 620 includes an AMF (Access Management Function) 621, an SMF (Session Management Function) 622, an NEF (Network Exposure Function) 623, a PCF (Policy Control Function) 624, a UDM (Unified Data Management) 625, and an AF (Application Function) 626.

The AMF 621 has functions such as registration processing, connection management, and mobility management for the UE 30. The SMF 622 has functions such as session management and IP assignment and management for the UE 30. An AUSF 443 has an authentication function. The NEF 623 has a function of providing capabilities and events of network functions to a third party, an AF 449, and an edge computing function. A PCF 447 has a function of policy control. A UDM 448 has functions of generating 3GPP AKA authentication information and processing a user ID. The AF 449 has a function of interacting with the core network to provide a service.

In the 5G network, each of a UE side (a device side) and a UPF side (a network side) is an entrance in some cases and is an exit in other cases. When the 5G network is caused to function as a TSN bridge, a TT (TSN translator) is disposed in the 5G network. The TT is a function of converting TSN setting or the like into inside setting of 5G. As the TT, there are a DS-TT (Device-Side TSN Translator) disposed on the device side and a NS-TT (Network-Side TSN Translator) disposed on the network side. Note that, when the UE 30 is a device of an endpoint of the TSN network, the DS-TT does not always have to be disposed.

In the current 5G network, a new function is not prepared for the TSN. The CNC performs various settings on the existing 5G system to thereby cause the 5G network to function as a TSN bridge. Among information set in the 5G network, there is information called TSC (Time sensitive communication) Assistance Information. With this information, information such as a period of traffic and an arrival time of a packet is provided to the 5G network.

The 5G network is requested to operate based on information provision from the TSN side (for example, the CNC). However, a detailed mechanism of the operation has not been determined. When a new characteristic is added to the TSN, measures on the 5G network side corresponding to the characteristic are necessary.

### <3-2-5. New characteristics of the TSN network>

It is assumed that robots and drones desired to be controlled by the TSN are grouped. That is, a TSN in future does not only have to cope with only a case in which a transmission side and a reception side simply operate in cooperation. It is assumed that the TSN in future also needs to cope with a case in which a plurality of reception sides operate in cooperation. For example, it is assumed that the TSN in future needs to cope with a case in which a plurality of industrial robots load components in cooperation when one product is manufactured in a factory.

An object of the current TSN is that a delay between the transmission side and the reception side is small and a packet arrives at time assumed by the transmission side and the reception side. However, when the plurality of reception sides cooperate, even if there is a delay or fluctuation, it is assumed that there is also a case in which an offset of the delay or the fluctuation is the same. Further, it is assumed that there is also a case in which it does not make sense unless all the reception sides forming a group satisfy a request. That is, in future, it is assumed that traffic assuming a cooperative operation on the reception side is important. This is assumed to be important not only in a factory but also when a plurality of users play a game over a network. It is assumed that this is important also in a use case in which a plurality of actors are present in different places and film shooting is performed over a network.

That is, in the TSN in future, the entire group is required to secure quality in the same manner when the quality of a network is guaranteed. This is referred to as Grouped TSN (Grouped Time Sensitive Networking) in the present embodiment.

A grouped plurality of traffics are likely to be transmitted and received at the same time. Accordingly, it is likely that congestion of packets occurs and a low delay and small fluctuation in delay cannot be secured. Conversely, it is likely that such a situation can be improved if grouping is devised to distribute traffic. In addition, even in one group, in a case in which a plurality of traffics are transmitted and received at different times, it is assumed that there is also a case in which congestion less easily occurs.

Here, an image of TSN traffic is explained. Typical TSN traffic is periodic traffic. For example, the TSN traffic is traffic having a period of approximately 2 ms to 1 s**.** A typical size (a packet size) of the TSN traffic is, for example, a size of approximately 50 bytes to 1500 bytes. The TSN traffic is traffic that is expected to deliver such a periodically arriving packet with as low a delay as possible and with small fluctuation in an arrival time.

### <<4. Operation of the communication system 1>>

Based on the above, an operation of the communication system 1 is explained below.

Note that, in the following explanation, a wireless network functioning as a TSN bridge is assumed to be a 5G network. However, the wireless network functioning as the TSN bridge may be a wireless network other than the 5G network. For example, the wireless network functioning as the TSN bridge may be a cellular network other than the 5G network such as a 4G network. In the following explanation, the 5G network functioning as the TSN bridge is simply referred to as 5G network.

In the following explanation, a device that manages the 5G network is assumed to be the management device 10. However, the device that manages the 5G network is not limited to the management device 10. For example, the device that manages the 5G network may be a device outside the 5G network. Description of the management device 10 appearing in the following explanation can be replaced with description indicating the device that manages the 5G network as appropriate.

In the following explanation, it is assumed that an application is an application using a TSN network. For example, the application may be, for example, an application function included in a communication device (for example, a drone, an industrial robot, or a server that controls the drone and the industrial robot) serving as an endpoint of the TSN network. The communication device itself serving as the endpoint may be grasped as the application. Besides, a part or the entire TSN system using the 5G network may be grasped as the application. For example, the network management device 40 (for example, a CUC or a CNC of the TSN network) may be grasped as the application. In the following explanation, "application" can be replaced as "communication device".

In the following explanation, a communication device that performs processing concerning TSN traffics is sometimes referred to as device configuring a TSN system or simply referred to as TSN system. At this time, the TSN system (the device configuring the TSN system) may be a communication device (for example, a communication device serving as an endpoint of the TSN network) having an application function of transmitting or receiving TSN traffics. The TSN system (the device configuring the TSN system) may be a device (for example, a communication device serving as the CUC or the CNC of the TSN network) other than the communication device serving as the endpoint.

### <4-1. First Embodiment>

First, an operation of the communication system 1 in a first embodiment is explained.

### <4-1-1. Problems>

In TSN, a plurality of robots (drones and industrial robots) are sometimes coordinately controlled as a group. In this case, a scheduled control signal group simultaneously arrives at a 5G network from control equipment on a TSN system side. That is, a large number of TSN traffics simultaneously arrive at the 5G network. When congestion of the simultaneously arriving TSN traffics occurs, a processing capability (for example, the computational power of the 5G network and the capacity of frequency resources) of the 5G network is sometimes exceeded. When the processing capability of the 5G network is exceeded, the TSN network cannot deliver control signals to the robots within a determined delay range. When the processing capability of the 5G network is exceeded, it is also assumed that a jitter increases.

The 5G network of the related art does not have a method of providing a processing capability for grouped TSN traffics to a TSN system (for example, a CUC, a CNC, or a communication device serving as an endpoint). Further, there is no reliable information concerning how to group TSN traffics on an application side that generates the TSN traffics.

### <4-1-2. Solution 1>

The 5G network is highly likely to be able to process traffic deterministically scheduled at an application level if the traffic is one TSN traffic. However, the 5G network sometimes cannot process the grouped TSN traffics because of shortage of a processing capability of the 5G network.

Therefore, the management device 10 acquires capability information of the 5G network from a device configuring the 5G network (or a storage unit of the management device 10). As explained above, the management device 10 is a device that manages the 5G network. Here, the capability information includes information concerning a processing capability concerning TSN traffics of the 5G network. The management device 10 discloses the acquired capability information to the TSN system. As explained above, the TSN system is a communication device that performs processing concerning TSN traffics. At this time, the TSN system may be configured to perform processing concerning the grouped TSN traffics.

An application for generating TSN traffics obtains capability information via the TSN system (for example, a CUC and a CNC). As explained above, the capability information includes the information concerning the processing capability concerning the TSN traffics of the 5G network. The application generates TSN traffics scheduled at an application level according to the processing capability of the 5G network. This enables delay guarantee for a grouped plurality of TSN traffics.

Note that the 5G network may be configured by a plurality of network slices. One network slice can be grasped as a virtually independent network. A processing capability of a UPF, a processing capability of scheduling of a base station, and a frequency resource and a time resource usable by the base station are sufficiently allocated to one network slice. Therefore, one network slice has a capability of buffering a packet and a capability of appropriately scheduling the packet and delivering the packet to a UE.

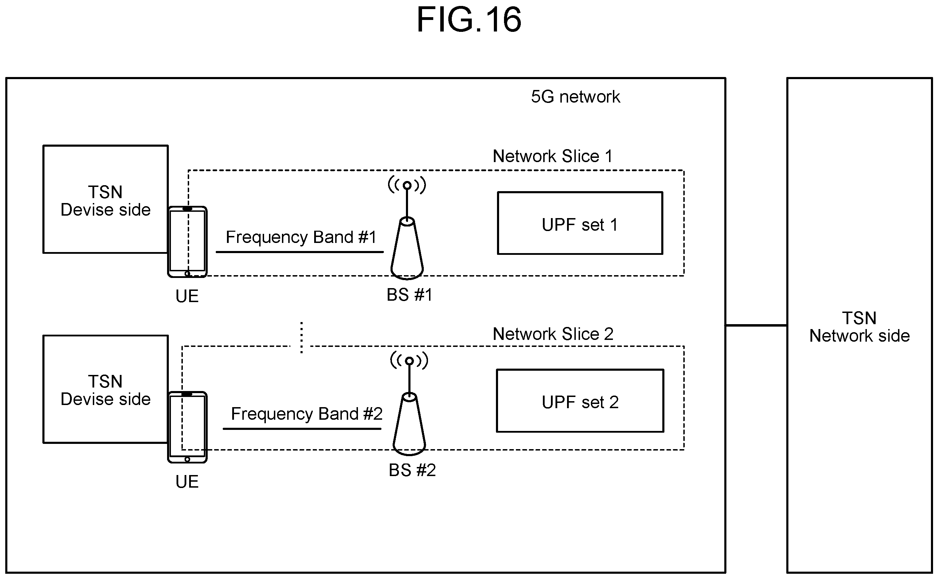

FIG. 16 is a diagram illustrating a configuration example of a network slice. In the example illustrated in FIG. 16, the 5G network includes at least a network slice 1 and a network slice 2 as network slices. The network slice 1 is configured by a UPF set 1, a BS #1, and a Frequency Band #1 that is a frequency resource used by the BS #1. The network slice 2 is configured by a UPF set 2, a BS #2, and a Frequency Band #2 that is a frequency resource used by the BS #2.

When the 5G network is configured by a plurality of network slices, the management device 10 may acquire, as capability information, information concerning a processing capability concerning TSN traffics of each of the plurality of network slices. The management device 10 notifies (discloses), to the TSN system, capability information including the information concerning the processing capability concerning the TSN traffics of each of the plurality of network slices.

Table 1 is a disclosure example of processing capabilities (capability information) of network slices. Note that the disclosure example explained below is only an example. A disclosure example of processing capabilities is not limited to this example. Note that the capability information disclosed by the management device 10 may be the processing capability itself of a wireless network. In this case, description of the network slice explained below may be replaced with description (for example, a cellular network such as a 5G network) indicating the wireless network. At this time, the processing capability of the wireless network disclosed by the management device 10 may be a total of processing capabilities of a plurality of network slices illustrated in Table 1.

**(Table 1) Disclosure example of processing capabilities of Network Slices**

| Characteristics of traffic | Processing capability of Network Slice #1 | Processing capability of Network Slice #2 | Processing capability of Network Slice #3 |
|---|---|---|---|
| 200ms periodicity, 100byte packet, < 30ms | 4 traffics | 4 traffics | 4 traffics |
| 200ms periodicity, 1000byte packet, < 50ms | 2 traffics | 2 traffics | 2 traffics |
| ... | ... | ... | ... |

The capability information includes at least information concerning the number or an amount of TSN traffics that can be processed by a network slice at one time (for example, 4 traffics/2 traffics illustrated in Table 1) and performance information indicating performance of the processing at one time. The performance information includes information concerning a period of traffic (for example, 200 ms periodicity illustrated in Table 1), information concerning a packet size per one TSN traffic (for example, 100 byte packet/1000 byte packet illustrated in Table 1), and information concerning a delay of arrival of TSN traffics (for example, <30 ms/<50 ms illustrated in Table 1). The information concerning the period of the traffic may be regarded as information concerning a time until the network slice becomes capable of executing the next processing at one time after executing the processing at one time.

A case in which the 5G network delivers a packet having a size of 100 bytes generated at a period of 200 ms to the UE is considered. One network slice has a capability of, even if four such TSN traffics simultaneously come, delivering the TSN traffics to the UE within 30 ms. Further, a case in which the 5G network delivers a packet having a size of 1000 bytes generated at a period of 200 ms to the UE will be considered. One network slice has a capability of, even if four TSN traffics simultaneously come, delivering the TSN traffics to the UE within 50 ms. That is, in the 5G network, the processing capability of TSN traffics is determined depending on the network slice retained in advance.

If a plurality of network slices are used, it is possible to perform a lot of processing. For that reason, the management device 10 may include, in the capability information, information indicating how many network slices can be provided (that is, information concerning the number of network slices that process TSN traffics).

### <4-1-3. Solution 2>

The processing capability and the frequency resources of the base station explained above can be regarded as other resources when an area changes. Here, the area may be, for example, a section such as a section A or a section B in a factory or an area covered by a specific base station. Since the processing capability of the base station is present for each base station, when the area changes, the processing capability of the base station can be regarded as another resource. If the area changes, even the same frequency band can be regarded as a different frequency resource. In 5G, the base station sometimes performs beamforming. In this case, even if there is only one base station in a plurality of areas, when a direction from the base stations is different, it can be regarded that a different frequency resource is present.

That is, it is easy to prepare, as other resources, components of a network slice other than a core network such as computational power and a frequency resource of the base station if the area changes. In addition, since the UPF of the core network is also a computer resource, it is possible to easily increase the capability of the UPF. For that reason, in general, as the area increases, the processing capability (for example, the number of TSN traffics that can be simultaneously processed) of the 5G network may be considered to increase.

Therefore, the management device 10 may disclose information concerning a processing capability of each of the plurality of areas to the TSN system as capability information. For example, the management device 10 can provide three network slices for the TSN in an area #1 and may disclose, to the TSN system, information indicating that the network slices are capable of simultaneously processing two TSN traffics of a 1000-byte packets (that is, even if a total of six TSN traffics are transmitted to a robot in a factory present in the area #1, the 5G network can process the TSN traffics).

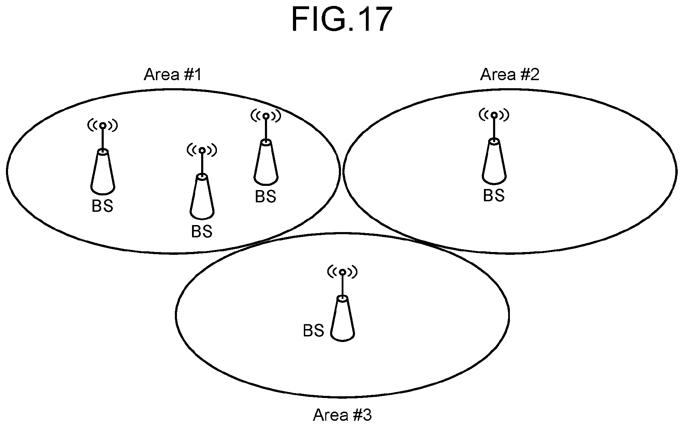

FIG. 17 is a diagram illustrating states of areas and base stations. In an example illustrated in FIG. 17, the 5G network is configured by three areas of an area #1, an area #2, and an area #3. Three base stations are disposed in the area #1 and one base station is disposed in each of the area #2 and the area #3.

When the 5G network is configured by a plurality of areas, the management device 10 may acquire, as capability information, information concerning a processing capability concerning TSN traffics of each of the plurality of areas. The management device 10 notifies (discloses), to the TSN system, capability information including the information concerning the processing capability concerning the TSN traffics of each of the plurality of areas.

Table 2 is a disclosure example of processing capabilities (capability information) of the areas. Note that the disclosure example explained below is only an example. A disclosure example of processing capabilities is not limited to this example.

**(Table 2) Disclosure example of processing capabilities of Areas**

| Characteristics of traffic | Processing capability of Area #1 | Processing capability of Area #2 | Processing capability of Area #3 |
|---|---|---|---|
| 200ms periodicity, 100byte packet, < 30ms | 12 traffics | 4 traffics | 4 traffics |
| 200ms periodicity, 1000byte packet, < 50ms | 6 traffics | 2 traffics | 2 traffics |
| ... | ... | ... | ... |

The capability information includes at least information concerning the number or amounts of TSN traffics that can be processed at one time in an area (for example, 12 traffics/4 traffics illustrated in Table 2) and performance information indicating performance of the processing at one time. The performance information includes information concerning a period of traffic (for example, 200 ms periodicity illustrated in Table 2), information concerning a packet size per one TSN traffic (for example, 100 byte packet/1000 byte packet illustrated in Table 1), and information concerning a delay of arrival of TSN traffics (for example, <30 ms/<50 ms illustrated in Table 2). The information concerning the period of the traffic may be regarded as information concerning a time until the network slice becomes capable of executing the next processing at one time after executing the processing at one time.

### <4-1-4. Processing on the TSN system side>

The TSN system performs control concerning TSN traffics based on capability information acquired from the 5G network. For example, an application for generating TSN traffics controls a packet size of one TSN traffic and transmission timing of traffic of the TSN based on capability information acquired from the 5G network. This control may be performed by a device other than the communication device serving as the endpoint of the TSN network (the communication device that generates the TSN traffics). For example, a device (for example, a CUC or a CNC) that manages the TSN system may perform, based on the capability information, control concerning TSN traffics by controlling a communication device (an application) serving as an endpoint.

Note that, when a plurality of TSN traffics occur, the TSN system (for example, the application) may group the plurality of TSN traffics. In this case, the application may control, based on the capability information, the number TSN traffics included in one group (that is, the number of TSN traffics transmitted at one time). For example, it is assumed that the application has acquired, from the 5G network, capability information indicating that two TSN traffics can be treated at one time in one network slice (or area). In this case, the application can group and transmit two TSN traffics.

Table 3 and Table 4 are examples of grouping in the case in which information concerning a processing capability of a network slice is disclosed as capability information. Specifically, Table 3 and Table 4 are setting examples of a group in the case in which the information illustrated in Table 1 is disclosed as the capability information. When one network slice can process two TSN traffics having a packet size of 1000 bytes, the TSN system cannot perform group setting for causing one network slice to process six TSN traffics, for example, as illustrated in Table 3. However, it is possible to cause three network slices to share and process six TSN traffics. In this case, the TSN system may divide the six TSN traffics into three groups to each of which one network slice is allocated, for example, as illustrated in Table 4. The TSN system may treat the six TSN traffics as one group to which three network slices are allocated, for example, as illustrated in Table 5.

**(Table 3) Setting Example 1 (Network Slice)**

| | TSN traffic configuration Group #1 | TSN traffic configuration Group #2 | TSN traffic configuration Group #3 |
|---|---|---|---|
| Network Slice Id | 1 | | |
| Periodicity | 200 ms | | |
| Packet size | 1000 byte | | |
| Latency | 50 ms | | |
| Number of traffic | 6 | | |
| ... | ... | | |

**(Table 4) Setting Example 2 (Network Slice)**

| | TSN traffic configuration Group #1 | TSN traffic configuration Group #2 | TSN traffic configuration Group #3 |
|---|---|---|---|
| Network Slice Id | 1 | 2 | 3 |
| Periodicity | 200 ms | 200 ms | 200 ms |
| Packet size | 1000 byte | 1000 byte | 1000 byte |
| Latency | 50 ms | 50 ms | 50 ms |
| Number of traffic | 2 | 2 | 2 |
| ... | ... | ... | ... |

**(Table 5) Setting Example 3 (Network Slice)**

| | TSN traffic configuration Group #1 | TSN traffic configuration Group #2 | TSN traffic configuration Group #3 |
|---|---|---|---|
| Network Slice Id | 1, 2, 3 | | |
| Periodicity | 200 ms | | |
| Packet size | 1000 byte | | |
| Latency | 50 ms | | |
| Number of traffic | 6 | | |
| ... | ... | | |

Table 6 to Table 8 are examples of grouping in the case in which information concerning a processing capability of an area is disclosed as capability information. Specifically, Table 6 to Table 8 are setting examples of groups in the case in which the information illustrated in Table 2 is disclosed as the capability information. When six TSN traffics having a packet size of 1000 bytes can be processed in one area, the TSN system cannot perform group setting for causing one network slice to process ten TSN traffics, for example, as illustrated in Table 6. However, it is possible to share and process the ten TSN traffics in three areas. In this case, the TSN system may divide the six TSN traffics into three groups to each of which one area is allocated, for example, as illustrated in Table 7. The TSN system may treat the ten TSN traffics as one group to which three areas are allocated, for example, as illustrated in Table 8.

**(Table 6) Setting Example 1 (Area)**

| | TSN traffic configuration Group #1 | TSN traffic configuration Group #2 | TSN traffic configuration Group #3 |
|---|---|---|---|
| Area Id | 1 | | |
| Periodicity | 200 ms | | |
| Packet size | 1000 byte | | |
| Latency | 50 ms | | |
| Number of traffic | 10 | | |
| ... | ... | | |

**(Table 7) Setting Example 2 (Area)**

| | TSN traffic configuration Group #1 | TSN traffic configuration Group #2 | TSN traffic configuration Group #3 |
|---|---|---|---|
| Area Id | 1 | 2 | 3 |
| Periodicity | 200 ms | 200 ms | 200 ms |
| Packet size | 1000 byte | 1000 byte | 1000 byte |
| Latency | 50 ms | 50 ms | 50 ms |
| Number of traffic | 6 | 2 | 2 |
| ... | ... | ... | ... |

**(Table 8) Setting Example 3 (Area)**

| | TSN traffic configuration Group #1 | TSN traffic configuration Group #2 | TSN traffic configuration Group #3 |
|---|---|---|---|
| Area Id | 1, 2, 3 | | |
| Periodicity | 200 ms | | |
| Packet size | 1000 byte | | |
| Latency | 50 ms | | |
| Number of traffic | 10 | | |
| ... | ... | | |

Note that the determination of the grouping explained above may be performed by the TSN system (for example, a CUC, a CNC, or an application) or may be performed by the 5G network itself. In this case, the 5G network (for example, the management device 10) may generate recommendation information for grouping the TSN traffics based on the capability information. Then, the 5G network (for example, the management device 10) may notify the recommendation information to the TSN system.

### <4-1-5. Sequence examples>

Subsequently, sequence examples of the first embodiment are explained.

### (Sequence example 1)

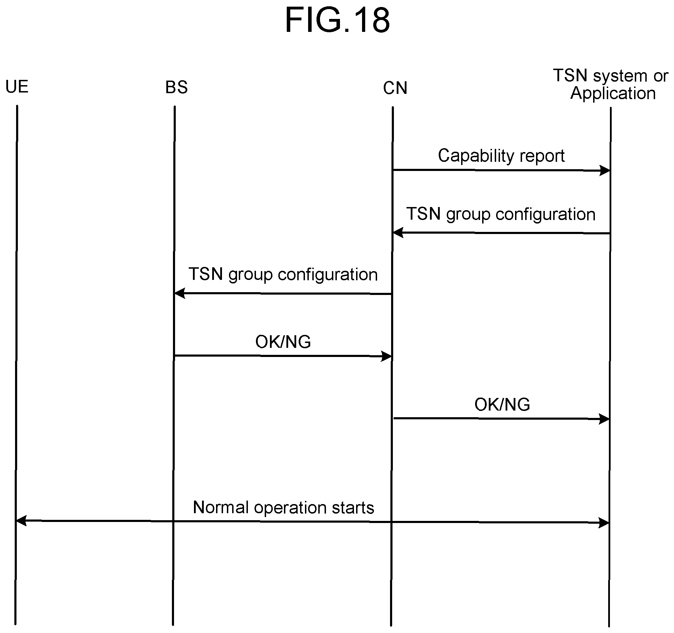

First, a sequence example in the case in which information concerning a processing capability of a network slice is disclosed as capability information is explained. FIG. 18 is a sequence example in the case in which information concerning the processing capability of the network slice is disclosed as the capability information. As explained above, the TSN system may be a CUC, may be a CNC, or may be a communication device serving as an endpoint. The TSN system may be an application.

First, the TSN system acquire capability information from the 5G network. The TSN system determines grouping of TSN traffics based on the capability information. Then, the TSN system notifies a determination result to the core network (for example, the management device 10) of the 5G network. The core network notifies the determination result to the base station. The core network and the base station may perform response of OK/NG with respect to the grouping determination result. Then, the UE communicates with the TSN system. Note that, when an entity (for example, a CUC) other than the application determines grouping, the entity may notify a result of the determination to the application. In this case, the application may perform the grouping based on the determination result.

### (Sequence example 2)

Subsequently, a sequence example in the case in which information concerning a processing capability of an area is disclosed as capability information is explained.

In the capability information illustrated in Table 8 explained above, three areas are used. Location information of the UE is necessary for the TSN system to determine which area TSN traffics belonging to a group use. Therefore, the 5G network (for example, the management device 10) needs to notify the location information of the UE to the TSN system in addition to the information concerning processing capabilities of the areas. Accordingly, the TSN system can determine in which area the TSN traffics are appropriately set. Note that the information of Area IDs 1, 2, and 3 illustrated in Table 8 may be given to identifiers for distinguishing TSN traffics in the group. Accordingly, the 5G network can grasp to which area processing of one group relates. As a result, the 5G network can appropriately allocate processing capabilities to groups.

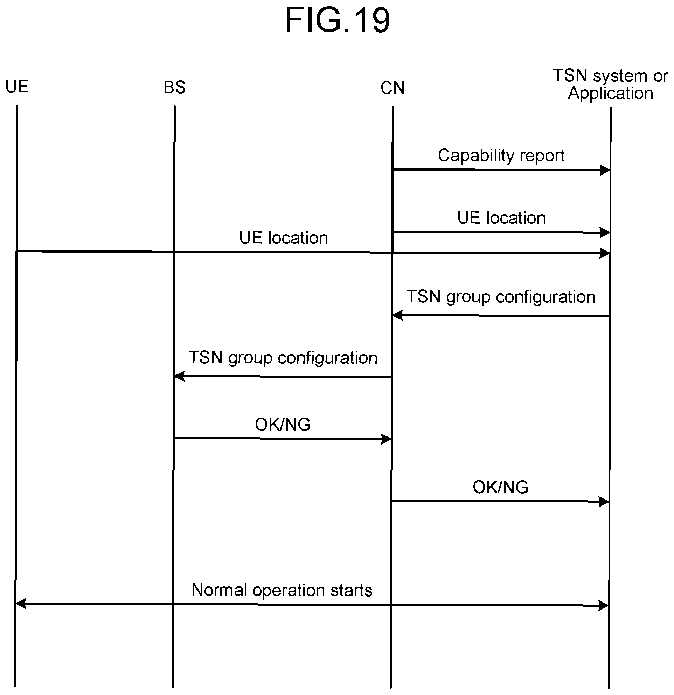

FIG. 19 is a sequence example in the case in which information concerning a processing capability of an area is disclosed as the capability information.

First, the TSN system (for example, a CUC, a CNC, or a communication device serving as an endpoint) acquires location information of the UE from the 5G network. At this time, the 5G network (for example, the management device 10) may notify location information of the UE retained in the core network to the TSN system. The UE may directly notify, to the TSN system, location information acquired by ae GPS or the like mounted on the UE using application layer level communication. Note that the location information of the UE may be deduced by the base station observing a reference signal or the like of the UE.

Subsequently, the TSN system acquires capability information from the 5G network. The TSN system determines grouping of TSN traffics based on the location information of the UE and the capability information. Then, the TSN system notifies a determination result to the core network (for example, the management device 10) of the 5G network. The core network notifies the determination result to the base station. The core network and the base station may perform response of OK/NG with respect to the grouping determination result. Then, the UE communicates with the TSN system. Note that, when an entity (for example, a CUC) other than the application determines grouping, the entity may notify a result of the determination to the application. In this case, the application may perform the grouping based on the determination result.

### <4-1-6. Others>

In the related art, a required latency or the like is notified to the 5G network and is allocated to sessions as information indicating QoS (Quality of Service) called 5QI (5G QoS Identifier). Priority control or the like is performed based on the information. In the present method, there is a request to cause a plurality of TSN traffics set in the same group to arrive at a destination at the same time. For that reason, in the 5G network, it is necessary to allocate an identifier indicating that a plurality of TSN traffics are in the same group to the sessions and manage the identifiers. The identifier is referred to as Group Identifier in the present embodiment. QoS control can be performed in various places in the 5G network. In the UPF, traffic shaping using a buffer can be performed. In the base station, priority control using a plurality of buffers can be performed. When QoS control functions grasp the Group Identifier, the 5G network can cause a plurality of TSN traffics set in the same group to arrive at a destination at the same time. To implement the above, the 5G network may manage correspondence between the Group Identifier and the TSN traffics.

### <4-1-7. Effects>

According to the first embodiment, the application using the TSN network can group and deliver time-sensitive control signals and user data to a target desired to be cooperatively controlled. For that reason, a large number of target objects can be simultaneously controlled with a low delay. Reactions of the large number of target objects become satisfactory. Since a control situation can be correctly delivered to targets desired to be controlled as a group, a plurality of target objects can be controlled in cooperation.

### <4-2. Second Embodiment>

Subsequently, an operation of the communication system 1 in a second embodiment is explained.

The first embodiment is based on the premise that a plurality of TSN traffics belonging to one group are generated at the same time. This is particularly effective, for example, in controlling a plurality of drones to fly in formation in the same manner. However, in this case, there is a risk that traffic concentrates on the same time. For that reason, it is necessary for the TSN system to grasp a processing capability concerning TSN traffics of the 5G network and change an area or adjust grouping such that the processing capability is not exceeded.

Therefore, in the second embodiment, the management device 10 discloses, to a TSN system, information concerning a processing time of processing at one time as capability information (performance information) of a network slice. Table 9 is a disclosure example of a processing capability of the network slice.

**(Table 9) Disclosure example of processing capabilities of Network Slices**

| Characteristics of traffic | Processing capability of Network Slice #1 | Processing capability of Network Slice #2 |
|---|---|---|
| 200ms periodicity, 100byte packet, < 30ms | 4 traffics/10 ms | 12 traffics/30 ms |
| 200ms periodicity, 1000byte packet, < 50ms | 2 traffics/10 ms | 6 traffics/30 ms |
| ... | ... | ... |

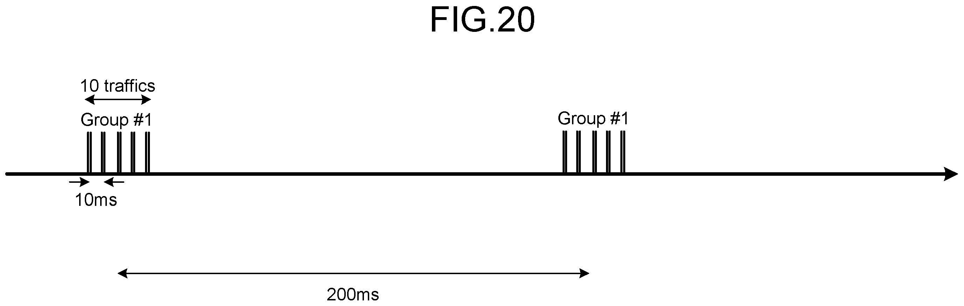

For example, the management device 10 discloses information such as 2 traffic/10 ms to the TSN system as the capability information of the network slice. Here, 10 ms is not a period but is a processing time. In this example, after processing two TSN traffics in 10 ms, the network slice can process other two TSN traffics in the next 10 ms. FIG. 20 is a diagram illustrating an example of TSN traffics generation by the TSN system. If such disclosure is performed, the TSN system (for example, an application) can distribute TSN traffics in a form suitable for a processing capability of the 5G network as illustrated in FIG. 20.

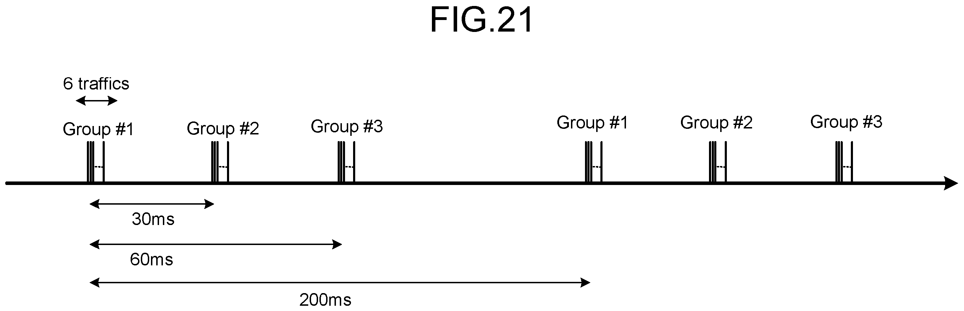

If the TSN system (for example, the application) uses eighteen TSN traffics in total, it can be assumed that the eighteen TSN traffics cannot be grouped into one because the processing capability of the 5G network is insufficient. In this case, the TSN system may divide the eighteen TSN traffics into a plurality of groups and cause the 5G network to process the TSN traffics at different times. FIG. 21 is a diagram illustrating an example of TSN traffic generation by the TSN system. In the example illustrated in FIG. 21, the TSN system divides eighteen TSN traffics into three groups and distributes the TSN traffics in a time method (in the example illustrated in FIG. 21, at intervals of 30 ms) and transmits the TSN traffics. This is a method of, when the processing capability of the 5G network is insufficient, rather than increasing the number of network slices, rearranging the groups such that the processing is distributed in the time direction. To implement the above, the TSN system sets a configuration of offsets among the groups.

In the case of the second embodiment, the same effects as the effects in the first embodiment can be expected.

Note that the method (the distribution of traffics in the time direction) explained in the second embodiment can also be applied to when the management device 10 discloses a processing capability other than the processing capability of the network slice. For example, the method explained in the second embodiment is also applicable when the management device 10 discloses a processing capability of the 5G network itself. In this case, the management device 10 may disclose, as capability information (performance information) of the 5G network, a processing time required by the 5G network in processing at one time. The method explained in the second embodiment is also applicable when the management device 10 discloses a processing capability of an area. In this case, the management device 10 may disclose, as capability information (performance information) of the area, a processing time required in processing at one time of areas.

### <4-3. Third Embodiment>

Subsequently, an operation of the communication system 1 in a third embodiment is explained.

### <4-3-1. Problems>

In some case, it is desired to cause a plurality of UEs operating in cooperation to operate with a time difference. For example, in some case, it is desired to, 10 ms after causing a first industrial robot to execute predetermined processing, cause a second industrial robot to execute other processing and, 20 ms after the processing, cause a third industrial robot to execute still other processing. When a plurality of drones flying in formation are turned to the left, in some case, it is desired to turn the drones to the left in order from the drone on the left side at predetermined time intervals in order to avoid collision of the drones.

If a time difference (hereinafter also referred to as offset) of the operations is large, the 5G network only has to simultaneously send, to a plurality of UEs, one setting command (packet) in which the large offset is programmed. In this case, the operation explained above can be implemented by the cooperating plurality of UEs operating with a large offset (for example, at one minute intervals) based on the one setting command. However, when the offset is small, it is difficult to implement the operation explained above. This is because it is difficult for the plurality of UEs to operate in synchronization at small time intervals.

Note that it is also conceivable to transmit, to the respective UEs, a setting command (TSN traffic) in which a processing start time is programmed. However, in this case, since the TSN traffic including the setting command reaches the plurality of UEs (for example, several tens of drones) at the same time, the problem of congestion explained in the first and second embodiments can occur. When congestion occurs, it is assumed that the TSN traffic does not simultaneously reach all the UEs.

In the third embodiment, it is assumed that it is difficult to implement a target operation even if one setting command is simultaneously transmitted to the plurality of UEs (for example, several tens of drones) operating in cooperation (for example, the offset is small). For example, when a plurality of drones performs a formation flight, it is assumed that a period of changing the direction of the formation flight is, for example, approximately 20 ms shorter than 1 second.

### <4-3-2. Solutions>

The management device 10 of the 5G network performs communication control such that the grouped TSN traffics are distributed and reach the plurality of UEs. For example, when an offset is set for the grouped TSN traffics, the management device 10 performs communication control for the core network and/or the base station 20 such that the grouped TSN traffics are distributed and reach the plurality of UEs to keep the offset. The setting of the offset to the TSN traffics may be performed by the TSN system (for example, the application) based on capability information of the 5G network. Here, the plurality of UEs are UEs serving as endpoints of the TSN network. The plurality of UEs may be the terminal devices 30 connected to the 5G network.

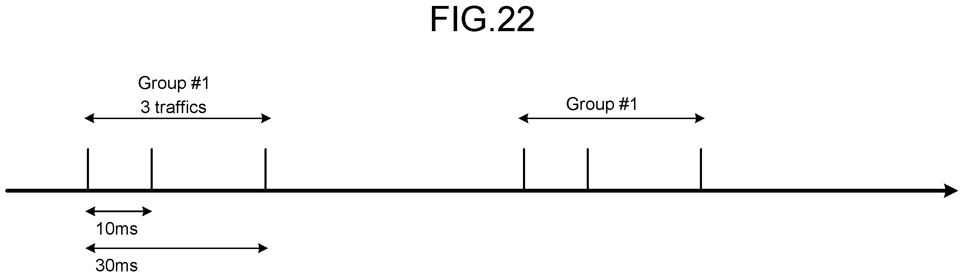

In the following explanation, the operation explained above is explained in detail with reference to the drawings. FIG. 22 is a diagram illustrating an example of TSN traffic generation by the TSN system. In the example illustrated in FIG. 22, the number of TSN traffics belonging to one group is three, and delay offsets are set as 0 ms, 10 ms, and 30 ms.

In the 5G network, a function of keeping an offset (for example, a QoS control function) is disposed. This function (hereinafter referred to as offset control function) may be disposed in the management device 10 or may be disposed in the base station 20. The offset control function performs communication control to keep the offset. For example, the offset control function measures a time from when the TSN traffics are transmitted. Then, the offset control function transmits a second TSN traffic when 10 ms elapse after the first TSN traffic is transmitted and transmits a third TSN traffic when 30 ms elapse from the first packet. In the present embodiment, the offset control function measures a time between a traffic and another traffic in a group and adjusts timing rather than transmitting a packet at every fixed time. Note that, in order to more reliably perform the offset control, the offset control function may start the processing explained above after the third TSN traffic arrives at the 5G network.

If the UEs have synchronized common clocks, the TSN traffics (packets) delivered to the UEs may include setting indicating that offsets of execution times are 0 ms, 10 ms, or 30 ms. Accordingly, it is possible to cause the UEs to perform an operation such as changing the directions of the drones at different times. However, in this case as well, in order to prevent congestion from occurring, it is desirable that the TSN traffics are delivered to the UEs with offsets of 0 ms, 10 ms, and 30 ms.

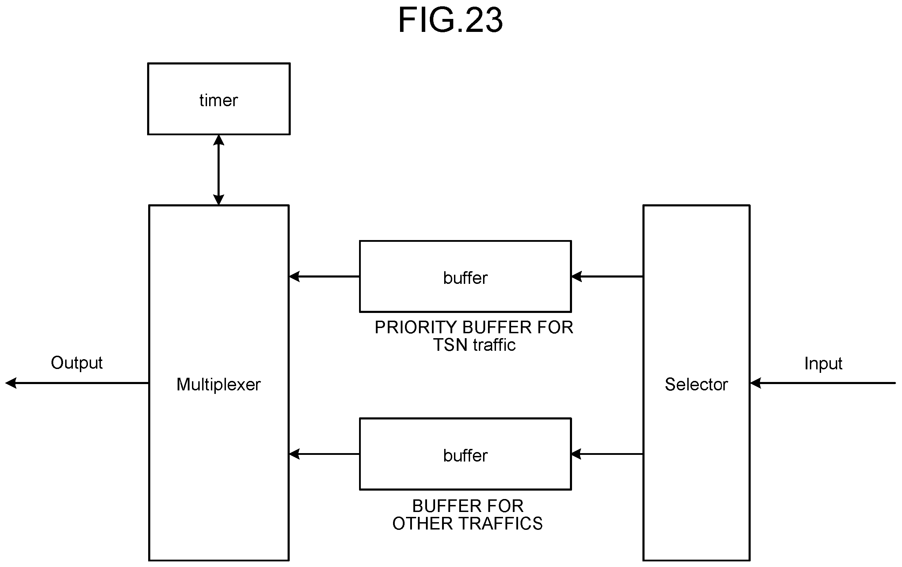

FIG. 23 is a diagram illustrating a configuration of the offset control function. The offset control function includes buffers for offset control for TSN traffics. In addition, the offset control function includes a selector that distributes the SN traffics to the buffers. When TSN traffics in which offsets are set are stored in the buffers for offset control, a multiplexer outputs the TSN traffics to the outside while adjusting transmission timing with a timer. Note that the offset control function may be provided in the UPF of the core network. The offset control function may be provided in a scheduler that manages a schedule of packet transmission and reception inside the base station.

Note that it is desirable that the plurality of UEs operating in cooperation belong to the same UPF and the same base station. This is because, since the offset control function is mounted on the UPF or the base station, if the plurality of UEs belong to the same UPF and the same base station, the possibility that the offsets are correctly set increases. Naturally, disposition of the plurality of UEs is not limited to this example. For example, the plurality of UEs may belong to the same UPF and different base stations.

### <4-3-3. Effects>

According to the third embodiment, the application using the TSN network can not only group and deliver time-sensitive control signals and user data to a target desired to be controlled in cooperation and but also deliver the control signals and the user data in a form in which offsets are kept. The control in the third embodiment is effective for a control target that sequentially performs time-shifted work. In particular, when a packet delay is several ms to several ten ms, the TSN system can not only group and deliver TSN traffics to a target desired to be cooperatively controlled but also deliver the TSN traffics in a form in which offsets are kept. The method in the third embodiment is effective for a control target that sequentially performs time-shifted work. In particular, when a delay request is several ms to several tens ms, even if one setting command is simultaneously sent to a plurality of targets, it is difficult to implement a target operation. By using the method of the present embodiment, a cooperative operation with an offset can be performed.

### <<5. Modifications>>

The embodiments explained above indicate examples. Various changes and applications of the embodiments are possible.

For example, in the embodiments explained above, the TSN traffics are grouped. However, the TSN traffics may not be grouped. In this case, the TSN network may not always be configured to be capable of treating grouped TSN traffics. The management device 10 may simply notify the capability information to the TSN system (for example, a CUC, a CNC, or a communication device serving as an endpoint) that performs processing concerning the TSN traffics.

In addition, in the embodiments explained above, the management device 10 notifies, for example, the information concerning the processing capability of the wireless network to the TSN system as the capability information. However, the capability information is not limited to the information explained in the embodiments explained above. For example, the management device 10 may notify information indicating whether the wireless network (for example, a 5G network, a network slice, or an area) can treat the grouped TSN traffics to the TSN system as the capability information.

In the embodiments explained above, the device that notifies the capability information to the TSN system is the management device 10. However, the device that notifies the capability information to the TSN system is not limited to the management device 10. For example, the device that notifies the capability information to the TSN system may be a device (for example, the base station 20) belonging to the wireless network other than the management device 10 or may be a device (for example, a server that manages a plurality of cellular networks of different generations or carriers) outside the wireless network.

In the embodiments explained above, the wireless network functioning as the TSN bridge is the 5G network. However, the wireless network may be a cellular network other than the 5G network. For example, the wireless network may be a 4G network or may be a next generation cellular network of the 5G network. The wireless network is not limited to a cellular network and may be, for example, a WiFi (registered trademark) network. Besides, the wireless network may be an unlicensed wireless network other than the WiFi network.

The control device that controls the management device 10, the base station 20, the terminal device 30, the network management device 40, or the communication device 50 in the present embodiments may be implemented by a dedicated computer system or may be implemented by a general-purpose computer system.

For example, a communication program for executing the operation explained above is distributed by being stored in a computer-readable recording medium such as an optical disk, a semiconductor memory, a magnetic tape, or a flexible disk. Then, for example, the control device is configured by installing the program in a computer and executing the processing explained above. At this time, the control device may be a device (for example, a personal computer) on the outside of the management device 10, the base station 20, the terminal device 30, the network management device 40, or the communication device 50. The control device may be a device (for example, the control unit 13, the control unit 23, the control unit 33, the control unit 43, or the control unit 53) on the inside of the management device 10, the base station 20, the terminal device 30, the network management device 40, or the communication device 50.

The communication program explained above may be stored in a disk device included in a server device on a network such as the Internet to make it possible to download the communication program to a computer. The functions explained above may be implemented by cooperation of an OS (Operating System) and application software. In this case, a portion other than the OS may be stored in a medium and distributed or the portion other than the OS may be stored in the server device to make it possible to download the portion to the computer.

Among the kinds of processing explained in the embodiment, all or a part of the processing explained as being automatically performed can be manually performed or all or a part of the processing explained as being manually performed can be automatically performed by a publicly-known method. Besides, the processing procedures, the specific names, and the information including the various data and parameters explained in the document and illustrated in the drawings can be optionally changed except when specifically noted otherwise. For example, the various kinds of information illustrated in the figures are not limited to the illustrated information.

The illustrated components of the devices are functionally conceptual and are not always required to be physically configured as illustrated in the figures. That is, specific forms of distribution and integration of the devices are not limited to the illustrated forms and all or a part thereof can be functionally or physically distributed and integrated in any unit according to various loads, usage situations, and the like. Note that this configuration by the distribution and the integration may be dynamically performed.

The embodiments explained above can be combined as appropriate in a range for not causing processing contents to contradict one another. The order of the steps illustrated in the flowcharts of the embodiments explained above can be changed as appropriate.

For example, the present embodiments can be implemented as any component configuring a device or a system, for example, a processor functioning as a system LSI (Large Scale Integration) or the like, a module that uses a plurality of processors or the like, a unit that uses a plurality of modules or the like, or a set obtained by further adding other functions to the unit (that is, a component as a part of the device).

Note that, in the present embodiments, the system means a set of a plurality of components (devices, modules (components), and the like). It does not matter whether all the components are present in the same housing. Therefore, both of a plurality of devices housed in separate housings and connected via a network and one device in which a plurality of modules is housed in one housing are systems.

For example, the present embodiment can adopt a configuration of cloud computing in which one function is shared and processed by a plurality of devices in cooperation via a network.

### <<6. Conclusion>>

As explained above, the information processing device (for example, the management device 10) in the present embodiments acquires the capability information including the information concerning the processing capability of the TSN traffics of the wireless network (for example, the 5G network) functioning as the TSN bridge. Then, the information processing device notifies the capability information to the TSN system. The TSN system performs control concerning TSN traffics based on the capability information.

Accordingly, since the TSN traffics are controlled considering a processing capability of the wireless network, even if the wireless network is included in the TSN network, it is possible to implement the TSN network sufficiently including the functions aimed by the TSN.

Although the embodiments of the present disclosure are explained above, the technical scope of the present disclosure is not limited to the embodiments per se. Various changes can be made without departing from the gist of the present disclosure. Components in different embodiments and modifications may be combined as appropriate.

The effects in the embodiments described in this specification are only illustrations and are not limited. Other effects may be present.

Note that the present technique can also take the following configurations.
(1) An information processing device comprising:
   an acquisition unit that acquires capability information including information concerning a processing capability concerning TSN (Time-Sensitive Networking) traffics of a wireless network forming at least a part of a TSN network; and
   a notification unit that notifies the capability information to a communication device that performs processing concerning the TSN traffics.
(2) The information processing device according to (1), wherein
   the TSN network is configured to be capable of treating grouped TSN traffics, and
   the notification unit notifies the capability information to at least a communication device that performs processing concerning the grouped TSN traffics.
(3) The information processing device according to (2), further comprising
   a generation unit that generates recommendation information of grouping of the TSN traffics based on the capability information, wherein
   the notification unit notifies the recommendation information to the communication device.
(4) The information processing device according to (2) or (3), wherein
   the information processing device performs communication control such that the grouped TSN traffics are distributed and reach terminal devices connected to the wireless network.
(5) The information processing device according to (4), wherein
   when an offset is set in the grouped TSN traffics, the information processing device performs communication control such that the grouped TSN traffics are distributed and reach the terminal devices to keep the offset.
(6) The information processing device according to any one of (2) to (5), wherein
   the notification unit notifies, to the communication device, information indicating whether the wireless network can treat the grouped TSN traffics.
(7) The information processing device according to any one of (1) to (6), wherein
   the capability information includes at least information concerning a number or an amount of the TSN traffics that can be processed by the wireless network at one time and performance information indicating performance of the processing at one time.
(8) The information processing device according to (7), wherein
   the performance information includes information concerning a delay of arrival of the TSN traffics and information concerning a packet size per one TSN traffic.
(9) The information processing device according to (7) or (8), wherein
   the performance information includes information concerning a time until the wireless network becomes capable of executing next processing at one time after executing the processing at one time.
(10) The information processing device according to any one of (7) to (9), wherein
   the performance information includes information concerning a processing time of the processing at one time.
(11) The information processing device according to any one of (1) to (6), wherein
   the wireless network is configured by a plurality of network slices,
   the acquisition unit acquires, as the capability information, at least information concerning a processing capability concerning the TSN traffics of each of the plurality of network slices, and
   the notification unit notifies, to the communication device, the capability information including the information concerning the processing capability concerning the TSN traffics of each of the plurality of network slices.
(12) The information processing device according to (11), wherein
   the capability information includes at least information concerning a number or an amount of the TSN traffics that can be processed at one time by each of the plurality of network slices and performance information indicating performance of the processing at one time.
(13) The information processing device according to (12), wherein
   the performance information includes information concerning a delay of arrival of the TSN traffics and information concerning a packet size per one TSN traffic.
(14) The information processing device according to (12) or (13), wherein
   the performance information includes information concerning a time until the network slice becomes capable of executing the next processing at one time after executing the processing at one time.
(15) The information processing device according to any one of (12) to (14), wherein
   the performance information includes information concerning a processing time of the processing at one time.
(16) The information processing device according to any one of (12) to (15), wherein
   the capability information includes information of a number of the network slices that process the TSN traffics.
(17) The information processing device according to any one of (1) to (6), wherein
   the wireless network is configured by a plurality of areas,
   the acquisition unit acquires, as the capability information, at least information concerning a processing capability of the TSN traffics of each of the plurality of areas, and
   the notification unit notifies, to the communication device, the capability information including the information concerning the processing capability of the TSN traffics of each of the plurality of areas.
(18) The information processing device according to any one of (1) to (17), wherein
   the communication device is a device functioning as a CUC (Centralized user configuration) or a CNC (Centralized network configuration) of the TSN network.
(19) The information processing device according to any one of (1) to (17), wherein
   the communication device is a device having an application function of transmitting or receiving the TSN traffics.
(20) An information processing method comprising:
   acquiring capability information including information concerning a processing capability concerning TSN (Time-Sensitive Networking) traffics of a wireless network forming at least a part of a TSN network; and
   notifying the capability information to a communication device that performs processing concerning the TSN traffics.

### Reference Signs List

1 COMMUNICATION SYSTEM
10 MANAGEMENT DEVICE
20 BASE STATION
30 TERMINAL DEVICE
40 NETWORK MANAGEMENT DEVICE
50 COMMUNICATION DEVICE
11, 41, 51 COMMUNICATION UNIT
21, 31 WIRELESS COMMUNICATION UNIT
12, 22, 32, 42, 52 STORAGE UNIT
13, 23, 33, 43, 53 CONTROL UNIT
131 ACQUISITION UNIT
132 NOTIFICATION UNIT
133 GENERATION UNIT
211, 311 TRANSMISSION PROCESSING UNIT
212, 312 RECEPTION PROCESSING UNIT
213, 313 ANTENNA

## Claims

1. An information processing device comprising:
an acquisition unit that acquires capability information including information concerning a processing capability concerning TSN (Time-Sensitive Networking) traffics of a wireless network forming at least a part of a TSN network; and
a notification unit that notifies the capability information to a communication device that performs processing concerning the TSN traffics.

2. The information processing device according to claim 1, wherein
the TSN network is configured to be capable of treating grouped TSN traffics, and
the notification unit notifies the capability information to at least a communication device that performs processing concerning the grouped TSN traffics.

3. The information processing device according to claim 2, further comprising
a generation unit that generates recommendation information of grouping of the TSN traffics based on the capability information, wherein
the notification unit notifies the recommendation information to the communication device.

4. The information processing device according to claim 2, wherein
the information processing device performs communication control such that the grouped TSN traffics are distributed and reach terminal devices connected to the wireless network.

5. The information processing device according to claim 4, wherein
when an offset is set in the grouped TSN traffics, the information processing device performs communication control such that the grouped TSN traffics are distributed and reach the terminal devices to keep the offset.

6. The information processing device according to claim 2, wherein
the notification unit notifies, to the communication device, information indicating whether the wireless network can treat the grouped TSN traffics.

7. The information processing device according to claim 1, wherein
the capability information includes at least information concerning a number or an amount of the TSN traffics that can be processed by the wireless network at one time and performance information indicating performance of the processing at one time.

8. The information processing device according to claim 7, wherein
the performance information includes information concerning a delay of arrival of the TSN traffics and information concerning a packet size per one TSN traffic.

9. The information processing device according to claim 7, wherein
the performance information includes information concerning a time until the wireless network becomes capable of executing next processing at one time after executing the processing at one time.

10. The information processing device according to claim 7, wherein
the performance information includes information concerning a processing time of the processing at one time.

11. The information processing device according to claim 1, wherein
the wireless network is configured by a plurality of network slices,
the acquisition unit acquires, as the capability information, at least information concerning a processing capability concerning the TSN traffics of each of the plurality of network slices, and
the notification unit notifies, to the communication device, the capability information including the information concerning the processing capability concerning the TSN traffics of each of the plurality of network slices.

12. The information processing device according to claim 11, wherein
the capability information includes at least information concerning a number or an amount of the TSN traffics that can be processed at one time by each of the plurality of network slices and performance information indicating performance of the processing at one time.

13. The information processing device according to claim 12, wherein
the performance information includes information concerning a delay of arrival of the TSN traffics and information concerning a packet size per one TSN traffic.

14. The information processing device according to claim 12, wherein
the performance information includes information concerning a time until the network slice becomes capable of executing the next processing at one time after executing the processing at one time.

15. The information processing device according to claim 12, wherein
the performance information includes information concerning a processing time of the processing at one time.

16. The information processing device according to claim 12, wherein
the capability information includes information of a number of the network slices that process the TSN traffics.

17. The information processing device according to claim 1, wherein
the wireless network is configured by a plurality of areas,
the acquisition unit acquires, as the capability information, at least information concerning a processing capability of the TSN traffics of each of the plurality of areas, and
the notification unit notifies, to the communication device, the capability information including the information concerning the processing capability of the TSN traffics of each of the plurality of areas.

18. The information processing device according to claim 1, wherein
the communication device is a device functioning as a CUC (Centralized user configuration) or a CNC (Centralized network configuration) of the TSN network.

19. The information processing device according to claim 1, wherein
the communication device is a device having an application function of transmitting or receiving the TSN traffics.

20. An information processing method comprising:
acquiring capability information including information concerning a processing capability concerning TSN (Time-Sensitive Networking) traffics of a wireless network forming at least a part of a TSN network; and
notifying the capability information to a communication device that performs processing concerning the TSN traffics.
